# EUROPEAN PATENT SPECIFICATION

(11) **EP 4 423 637 B1**
(45) Date of publication and mention of the grant of the patent: **16.07.2025**
(21) Application number: 22809511.3
(22) Date of filing: 25.10.2022
(51) Int. Cl.: G06F 21/31, G06F 21/60, H04L 9/40

(54) **METHOD AND ELECTRONIC SYSTEM TO ENABLE A REMOTE OPERATION BY MEANS OF A POINT-TO-POINT CONNECTION**
VERFAHREN UND ELEKTRONISCHES SYSTEM ZUR ERMÖGLICHUNG EINER FERNBEDIENUNG MITTELS EINER PUNKT-ZU-PUNKT-VERBINDUNG
PROCÉDÉ ET SYSTÈME ÉLECTRONIQUE POUR PERMETTRE UNE OPÉRATION À DISTANCE AU MOYEN D'UNE CONNEXION POINT À POINT

(30) Priority: 28.10.2021 IT 202100027632
(43) Date of publication of application: 04.09.2024
(73) Proprietor: Foolfarm S.p.A., 20122 Milano (IT)
(72) Inventor: CINELLI, Andrea, 20152 Milano (IT)
(74) Representative: Penza, Giancarlo
(86) International application number: PCT/IB2022/060227
(87) International publication number: WO 2023/073542

(56) References cited:
- WO-A1-01/90968
- WO-A1-2019/092046
- US-A1- 2007 233 615

## Description

### Technical field of the invention

The present invention generally relates to the field of the digital identity of a user of a mobile electronic device or of a personal computer.

More particularly, the present invention concerns a method and electronic system to enable a remote operation by using a secure point-to-point connection, such as for example a payment operation between two subjects.

### Prior art

The authentication procedure in which the identity of a subject who has been identified in a previous identification step is verified is well known: in the authentication step it is verified in real time that the subject (using a smartphone or a personal computer) who wants to use a particular service is actually the one he/she has claimed to be in the previous identification step.

For example, the service can be to access a bank account, sign a contract remotely, or open a bank account.

The use of strong authentication procedures is known which use the combination of at least two factors of a different type to increase the level of security with which the subject is identified, in particular by using a factor known to the subject to be identified (for example, a password) and a factor associated to a physical object belonging to the user (for example, his/her face).

Digital payment systems such as for example PayPal, Amazon Pay, Apple Pay or Satispay are known, which have the advantage of allowing the payment for a good or service purchased online simply by clicking on a button indicating the payment by means of one of the systems indicated above, without requiring entering the data of a credit card and exploiting an account which was previously created by the user.

The Applicant has observed that the known payment systems have the following drawbacks:
- they do not ensure with sufficient certainty that the recipient of the payment is correct and/or that he/she is actually who he/she claims to be;
- they do not enable a cash payment with a sufficient level of security.

Document US 2007/233615 A1 discloses a method for enabling operations between peers.

### Brief summary of the invention

The present invention concerns a method and electronic system to enable a remote operation by means of a point-to-point connection as defined in the appended claims 1 and 8 and by preferred embodiments thereof described in dependent claims 2 to 6 and 9-11.

The Applicant has perceived that the method and electronic system to enable the remote operation in accordance with the present invention have the following advantages:
- they increase the certainty that the recipient of the remote operation (e.g. a payment) is correct and/or he/she is actually who he/she claims to be;
- they allow obtaining a medium-high level of security for a cash payment;
- they comply with EIDAS regulations (Electronic Identification Authentication and Signature), EU Regulation no. 910/2014.

The basic idea is to generate a unique operation identifier which contains information indicative of the type of point-to-point connection operation (for example, a money payment command) between a first electronic device associated with a first subject and a second electronic device of a second subject (or between the first electronic device and a point of sale or a website of an online virtual shop) and also contains a user identifier, then to share said unique operation identifier between the first electronic device and the second electronic device (or to share it with the point of sale or with the website of the online virtual shop), therefore the digital identity of the subject who requested the payment is verified by means of the first electronic device, then the digital identity of the subject associated with the second electronic device is verified (or the identity of the point of sale/virtual shop website has been previously certified) by means of an authentication sub-system in order to establish a secure point-to-point connection between the first electronic device and the second electronic device (or between the first electronic device and the point of sale/website of the virtual shop).

It is also an object of the present invention a non-transitory computer-readable storage medium as defined in appended claim 7.

### Brief description of the drawings

Additional features and advantages of the invention will become more apparent from the description which follows of a preferred embodiment and the variants thereof, provided by way of example with reference to the appended drawings, in which:
- Figure 1 shows a block diagram of an electronic system to enable a payment by means of a point-to-point connection according to a first embodiment of the invention;
- Figure 2 shows in more detail a part of the electronic system of figure 1;
- Figures 3A-3B show a trend over time of the messages exchanged between the various components of the electronic system to enable the payment according to the first embodiment of the invention;
- Figure 4 shows a block diagram of an electronic system to enable a payment by means of a point-to-point connection based on a second embodiment of the invention;
- Figures 5A-5B show a trend over time of the messages exchanged between the various components of the electronic system to enable the payment based on the second embodiment of the invention.

### Detailed description of the invention

It should be noted that in the description below, identical or similar blocks, components or modules, even if they appear in different embodiments of the invention, are indicated by the same numerical references in the figures.

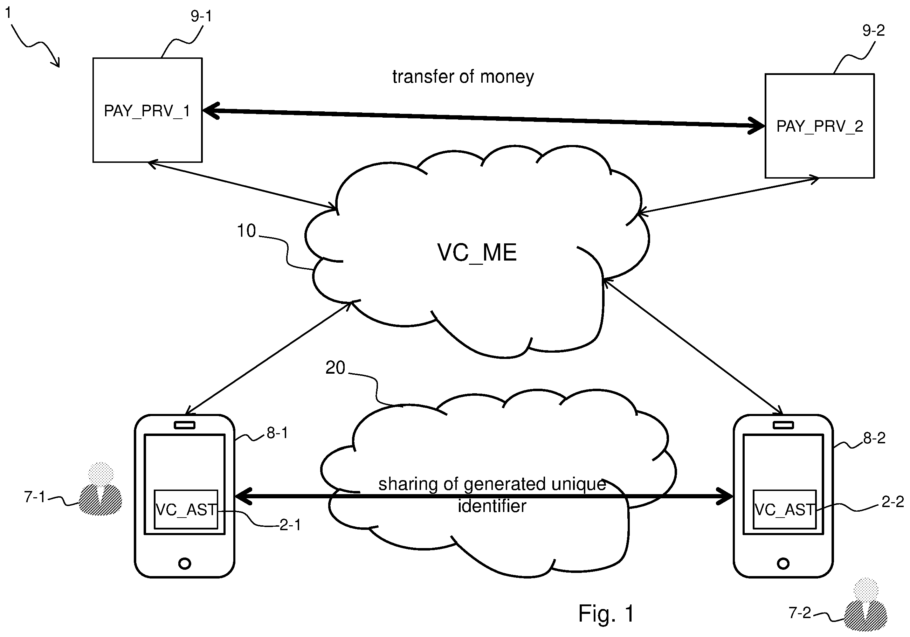

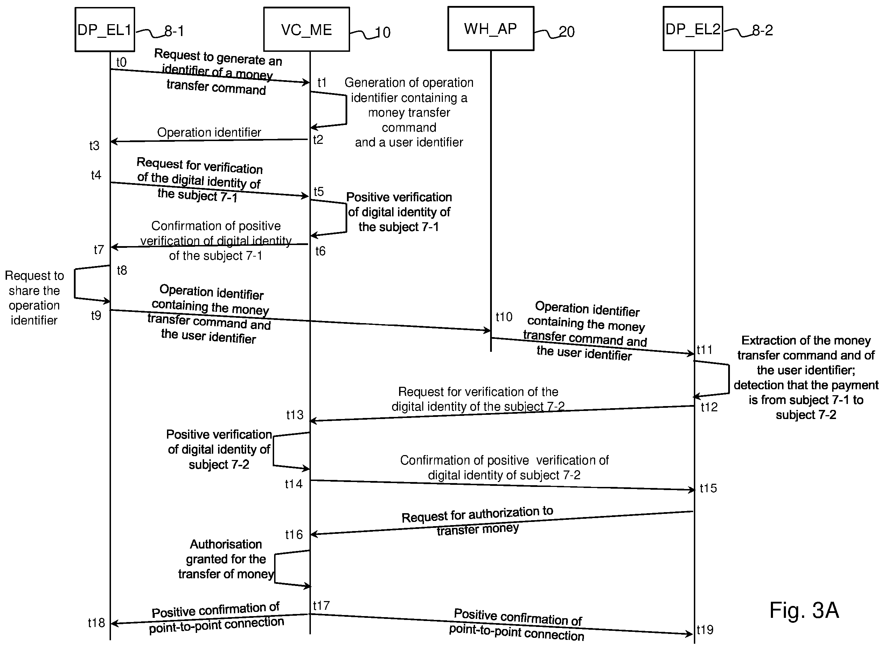

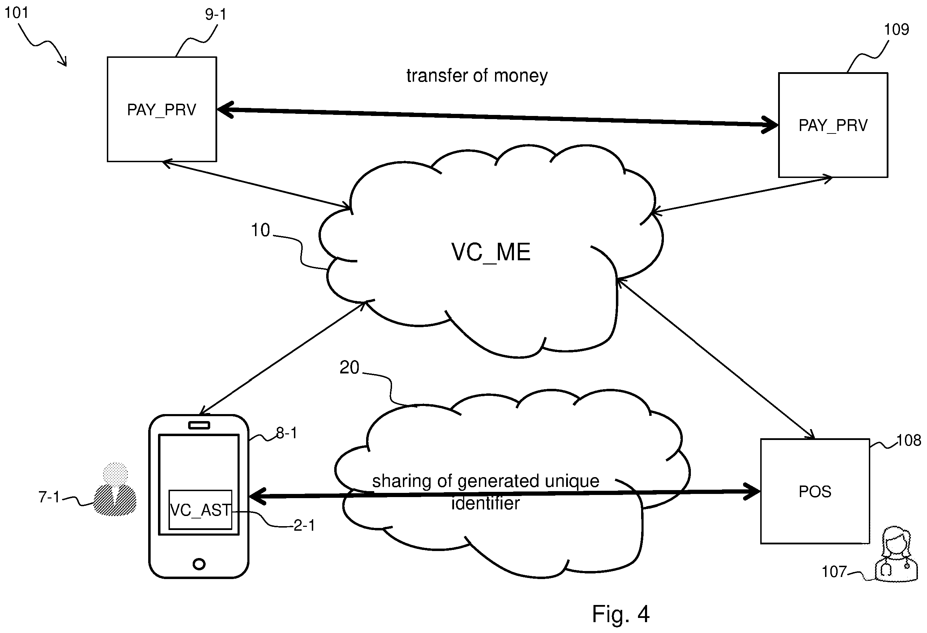

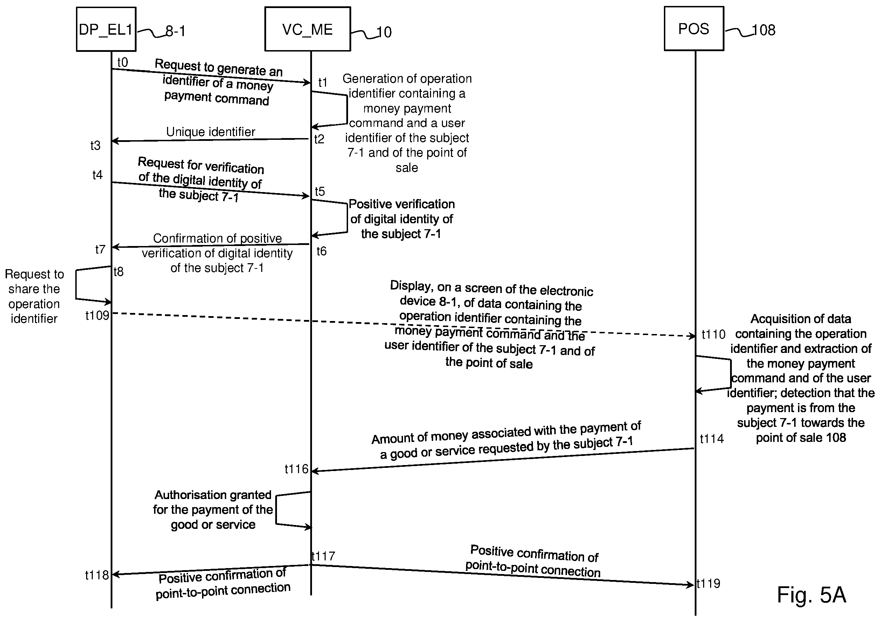

For the purpose of explaining the invention, a money payment operation is taken into consideration in figures 1 and 3A-3B and the payment of a good or service is taken into consideration in figures 4 and 5A-5B, but more generally the invention can also be applied to other types of operations, such as for example for:
- enabling the transfer of a digital file containing important information;
- enabling the exchange of documents in digital format;
- enabling a protected communication channel between two connected users via a telecommunications network (e.g. Internet);
- activating a tracked communication between a user and a device IoT.

With reference to figure 1, it is shown an electronic system 1 to enable a payment of money by means of a point-to-point connection according to a first embodiment of the invention.

In particular, in Figures 1 and 3A-3B of the first embodiment, a payment that is a transfer of money between two subjects is considered, wherein the transfer of money is requested by a first subject 7-1 by means of a first electronic device 8-1, while the payment is received by a second subject 7-2 to whom a second electronic device 8-2 belongs.

More generally, for example, the payment may be one of the following:
- a transfer of money between two subjects;
- a transfer of money between a subject and a point of sale, for example for the purchase of a good (for example, a food product) or service (for example, a medical examination, a financial product, a holiday);
- a transfer of money between a subject and a virtual shop, for the purchase of a good (for example, a book in digital format) or of a service (for example, a medical examination, a financial product, a holiday, a digital file to download containing important information).

The electronic system 1 comprises a first electronic device 8-1, a second electronic device 8-2, a first authentication sub-system 10, a second message sharing sub-system 20, a first payment server device 9-1 and a second payment server device 9-2.

The authentication sub-system 10 comprises a plurality of electronic devices, which are connected by means of a medium-long distance telecommunications network, for example the Internet network using the TCP/IP protocol, with a client-server architecture and use of Web Services.

According to the first and second embodiments of the invention, the authentication sub-system 10 has the function of dynamically generating (by means of a server device 105 which will be illustrated below) a unique operation identifier that contains information indicative of the type of payment operation requested by the subject 7-1 and contains a user identifier identifying the users involved in the payment operation, i.e. the subjects 7-1 and 7-2 in the case of a money transfer command between them or the subject 7-1 and a point of sale 108 in the case of a payment command for a good or service.

The term "dynamically generated unique operation identifier" means that the value of the operation identifier changes with each request for a new payment operation by the subject 7-1.

The use of the unique operation identifier allows to make the payment operation tracked and verifiable, as the unique operation identifier is secure because it contains the recipient's information and therefore only the correct recipient will be able to be successfully identified, thus starting the type of operation required only in case that the recognition of the digital identity of both parties (i.e. the subject 7-1 and the subject 7-2) has been successfully performed, as will be explained in more detail below.

For example, the unique operation identifier is a unique code associated with a web link or contained in a bar code or a QR code, in which said code contains information indicative of the type of payment operation requested and contains the identifier of the users involved in the payment operation, such as for example a transfer of money between two subjects or the payment for the purchase of a good or service.

Advantageously, an asymmetric encryption (i.e. using a public and a private key) of the generated value of the operation identifier is performed to protect the operation identifier transmitted by the first electronic device 8-1 to the second electronic device 8-2: in this way the encrypted value of the operation identifier is anonymous, i.e. the information contained in the operation identifier cannot be interpreted by a human being since they are not clear, while they can be interpreted by the second electronic device 8-2 in which the decryption of the received operation identifier is performed (by means of a public key).

For example, in the case of entering the operation identification code within a website, the operation identification code is regenerated each time the web page is loaded, allowing a secure connection between the user and the service towards which the payment will be made.

Furthermore, according to the first and second embodiments, the authentication sub-system 10 has the further function of authenticating a subject 7-1 to whom the first electronic device 8-1 belongs, or of verifying the digital identity of the subject 7-1, by means of a voice and/or facial and/or eye type biometric control.

Furthermore, according to the first embodiment, the authentication sub-system 10 has the further function of authenticating a subject 7-2 to whom the second electronic device 8-2 belongs, or of verifying the digital identity of the subject 7-2, by means of a voice and/or facial and/or eye biometric control.

In particular, in the first embodiment, the authentication sub-system 10 is configured to receive a message indicative of a request to generate a payment operation identifier, and is configured to generate a unique operation identifier containing information indicative of the type of payment operation and contains a user identifier identifying the subject 7-1 (who requested the payment) and the subject 7-2 (who receives the payment).

Furthermore, in the first embodiment, the authentication sub-system 10 is configured to transmit, towards the first electronic device 8-1, a message carrying a value of said generated unique operation identifier.

Furthermore in the first embodiment the authentication sub-system 10 is configured to receive a request message requesting the verification a digital identity of the first subject 7-1, therefore the authentication sub-system 10 is configured to perform a positive or negative verification of the digital identity of the first subject 7-1.

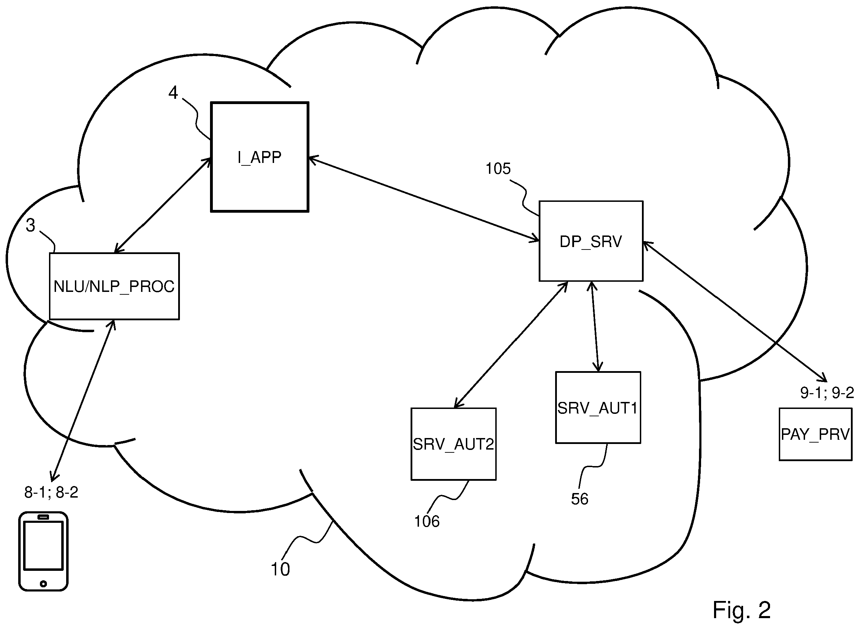

For example, the digital identity of the first subject 7-1 is verified by means of the authentication sub-system 10 made as described in figure 2 illustrated below.

Furthermore, in the first embodiment, the authentication sub-system 10 is configured to transmit, towards the first electronic device 8-1, a confirmation message confirming the positive verification of the digital identity of the first subject 7-1, in case that the digital identity of the first subject 7-1 has been successfully verified; alternatively, the authentication sub-system 10 is configured to transmit, towards the first electronic device 8-1, a message of negative verification of the digital identity of the first subject 7-1, in case of a negative verification of the digital identity of the first subject 7-1.

Furthermore in the first embodiment the authentication sub-system 10 is configured to receive a request message requesting the verification of the digital identity of the second subject 7-2, therefore the authentication sub-system 10 is configured to perform a positive or negative verification of the digital identity of the second subject 7-2.

For example, the digital identity of the second subject 7-2 is verified by means of the authentication sub-system 10 made as described in figure 2 illustrated below.

Furthermore, in the first embodiment, the authentication sub-system 10 is configured to transmit, towards the second electronic device 8-2, a confirmation message confirming the positive verification of the digital identity of the second subject 7-2, in case that the digital identity of the second subject 7-2 has been successfully verified; alternatively, the authentication sub-system 10 is configured to transmit, towards the second electronic device 8-2, a message of negative verification of the digital identity of the second subject 7-2, in case of a negative verification of the digital identity of the second subject 7-2.

The authentication sub-system 10 has the additional function of enabling the payment requested by the subject 7-1.

In particular, in the first embodiment, the authentication sub-system 10 is configured to receive a request message requesting the authorisation of the payment operation, and is configured to generate an authorisation granted or denied to make said payment operation, respectively as a function of the positive or negative verification of the digital identity of the second subject 7-2.

Furthermore, in the first embodiment, the authentication sub-system 10 is configured to transmit, towards the first electronic device 8-1 and/or towards the second electronic device 8-2, a message indicative of a positive or negative confirmation to a point-to-point connection between the first electronic device 8-1 and the second electronic device 8-2, as a function respectively of the authorisation granted or denied to transfer money.

In the second embodiment, the authentication sub-system 10 is configured to receive a message carrying a value indicative of an amount of money associated with the payment of the good or service and is configured to generate an authorisation granted or denied to make said payment of the good or service, as a function respectively of a positive or negative verification of the digital identity of the first subject 7-1.

Furthermore, in the second embodiment, the authentication sub-system 10 is configured to transmit, towards the first electronic device 8-1, a message indicative of a positive or negative confirmation to a point-to-point connection between the first electronic device 8-1 and the point of sale 108, as a function respectively of an authorisation granted or denied to pay for the good or service.

The first electronic device 8-1 may be of the fixed type (e.g., a personal computer or totem) or of the mobile type (e.g., a smartphone, tablet, or laptop) and belongs to the subject 7-1.

For the purposes of explaining the invention, it is considered below for simplicity's sake that the first electronic device 8-1 is of the mobile type, in particular it is a smartphone on which a particular application is installed to perform a part of the method of the first, second and third embodiments of the invention.

The electronic device 8-1 comprises a loudspeaker, a microphone, a processing unit (e.g., a microprocessor), a medium-long distance signal transceiver (e.g., 2G/3G/4G/5G mobile radio-type wireless signals) and, preferably, a camera and a voice assistant 2-1.

Preferably, the electronic device 8-1 comprises a voice assistant 2-1 which has the function of interpreting the language of the human being and of communicating with him.

The voice assistant 2-1 is a software application (i.e. a software program) run by means of the processing unit of the electronic device 8-1, such as for example the Google Assistant application for smartphones or tablets using the Android operating system, or the Siri application for iPhone or iPad or the Cortana Voice Assistant for Personal computers with Windows operating system: in this case, the voice assistant 2-1 and the electronic device 8-1 are made as a single electronic component (for example, a smartphone or iPhone or a Personal computer).

Alternatively, the voice assistant can be made with a dedicated electronic device separate from the electronic device 8-1, such as for example Google Home or Amazon Echo (or Echo dot) with Alexa.

In particular, in the first and second embodiments the first electronic device 8-1 is configured to transmit, towards the authentication system 10, a message indicative of a request to generate an identifier of a payment operation requested by a first subject 7-1 associated with the first electronic device 8-1.

Furthermore, the first electronic device 8-1 is configured to receive a message carrying a value of a unique operation identifier that contains information indicative of the type of payment operation requested by the subject 7-1 and contains a user identifier identifying the subjects 7-1 and 7-2 involved in the payment operation, therefore the first electronic device 8-1 is configured to transmit, towards the authentication system 10, a request message requesting the verification of a digital identity of the first subject 7-1.

Furthermore, the first electronic device 8-1 is configured to receive a confirmation message confirming the positive verification of the digital identity of the first subject 7-1 and is configured to generate a request to share the operation identifier with the second electronic device 8-2.

Furthermore, the first electronic device 8-1 is configured to transmit, towards the second electronic device 8-2, a message carrying a value of the operation identifier.

Finally, the first electronic device 8-1 is configured to receive a message indicative of a positive or negative confirmation to a point-to-point connection between the first electronic device 8-1 and the second electronic device 8-2.

The second electronic device 8-2 may be of the fixed type (e.g., a personal computer or totem) or of the mobile type (e.g., a smartphone, tablet, or laptop) and belongs to the subject 7-2.

The foregoing considerations relating to the first electronic device 8-1 are applicable analogously to the second electronic device 8-2, i.e. this comprises a loudspeaker, a microphone, a processing unit (e.g., a microprocessor), a medium-long distance signal transceiver (e.g., 2G/3G/4G/5G mobile radio-type wireless signals) and, preferably, a camera and a voice assistant 2-2.

For the purposes of explaining the invention, it is considered below for simplicity's sake that the second electronic device 8-2 is of the mobile type, in particular it is a smartphone on which the particular application is installed to perform another part of the method according to the first embodiment of the invention.

In particular, in the first embodiment the second electronic device 8-2 is configured to receive the message carrying the value of the operation identifier and is configured to extract therefrom the information indicative of the type of payment operation (i.e. money transfer) and extract the value of the user identifier identifying the subjects 7-1 and 7-2, thus detecting that the payment operation (money transfer) was requested by the subject 7-1 (by means of the first electronic device 8-1) towards the subject 7-2.

Furthermore, in the first embodiment, the second electronic device 8-2 is configured to transmit, towards the authentication system 10, a request message requesting the verification of the digital identity of the second subject 7-2 associated with the second electronic device 8-2.

Furthermore, in the first embodiment, the second electronic device 8-2 is configured to receive a confirmation message confirming the positive verification of the digital identity of the second subject 7-2 and is configured to transmit, towards the authentication system 10, a request message requesting the authorisation of the payment operation.

Finally, the second electronic device 8-2 is configured to receive a message indicative of a positive or negative confirmation to a point-to-point connection between the first electronic device 8-1 and the second electronic device 8-2.

According to the first embodiment, the message sharing sub-system 20 is connected with the first electronic device 8-1 and with the second electronic device 8-2, by means of a medium-long distance telecommunications network (for example, the Internet network or a mobile radio network).

In the first embodiment, the message sharing sub-system 20 has the function of forwarding, from the first electronic device 8-1 to the second electronic device 8-2, a message carrying the unique operation identifier that contains a payment or money transfer command and contains a user identifier identifying the subjects 7-1 and 7-2 involved in the payment operation.

The message sharing sub-system 20 is thus separated from the authentication sub-system 10, i.e. is external thereto.

For example, the message sharing sub-system 20 is implemented with an e-mail message, a WhatsApp message, a short text message (SMS), or other message exchange systems.

The first payment server device 9-1 is a payment gateway that is located at a bank or a financial institution managing payment systems and has the function of managing the payment requested by the first subject 7-1; in particular, the first payment server device 9-1 manages a bank account belonging to the first subject 7-1.

The first payment server device 9-1 is therefore an electronic device comprising a medium-long distance signal transceiver for exchanging data with the authentication sub-system 10 and for directly exchanging data with the second payment server device 9-2.

The second payment server device 9-2 is a payment gateway that is located at a bank or a financial institution managing payment systems and has the function of managing the payment towards the second subject 7-2 (first embodiment) or the payment at the place where the point of sale 108 is located (second embodiment); in particular, the second payment server device 9-2 manages a bank account belonging to the second subject 7-2, or it manages a bank account that is associated with the point of sale 108.

The second payment server device 9-2 is therefore an electronic device comprising a medium-long distance signal transceiver for exchanging data with the authentication sub-system 10 and for directly exchanging data with the first payment server device 9-1.

With reference to figure 2, the authentication sub-system 10 is shown in more detail.

The authentication sub-system 10 may be implemented, for example, as described in PCT patent application having filing number PCT/IB2021/055428 filed on 21 June 2021 in the name of the same Applicant.

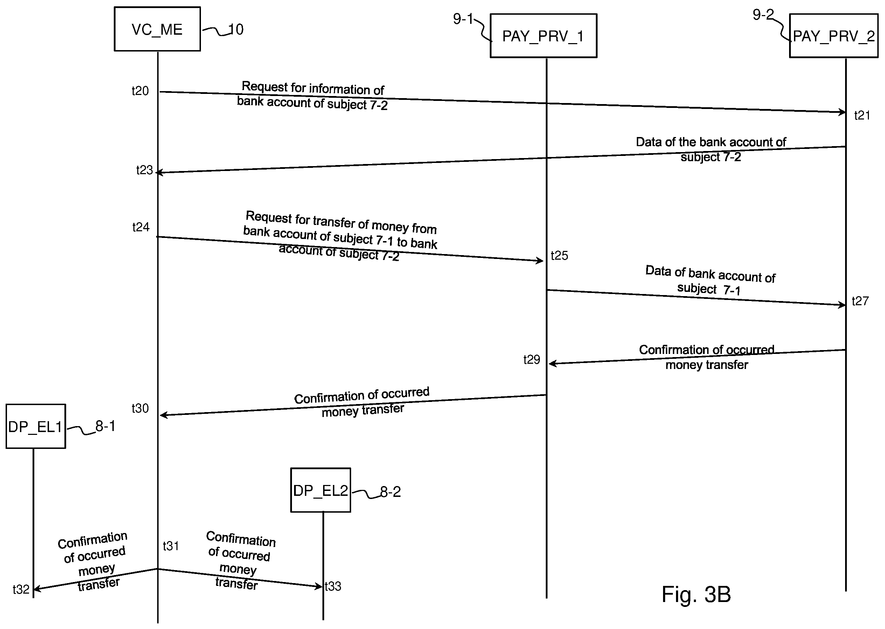

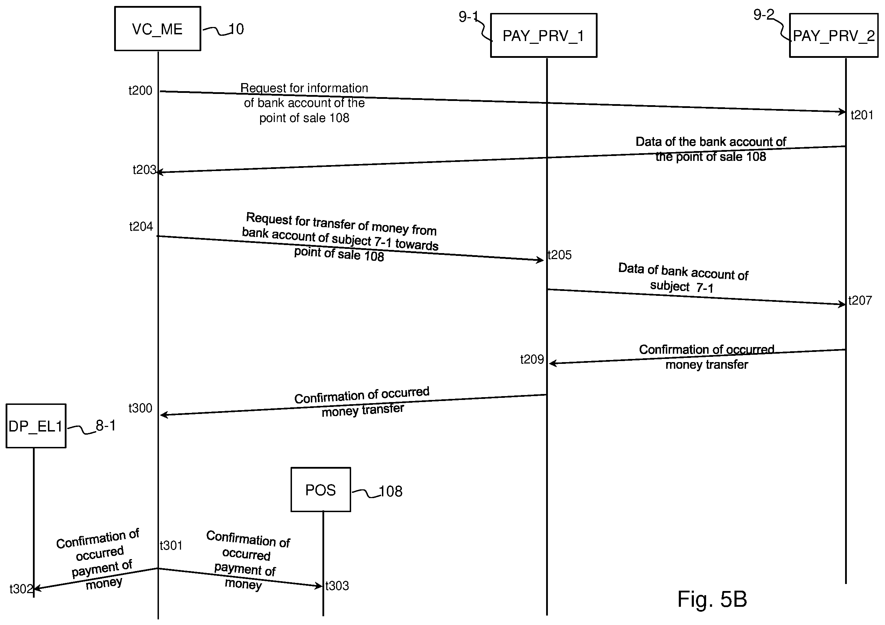

In particular, the authentication sub-system 10 can be realized as illustrated in figure 3 or in figure 5 of the PCT patent application indicated above, using an operating server device 105, a first authentication server device 56, a second authentication server device 106, an electronic human language processor 3 and a paid service delivery application 4: by means of these devices the digital identity of the subjects 7-1, 7-2 is verified using a voice (or voice/facial, or voice/facial/eye) type biometric authentication that makes the comparison between a sample voice profile (or a sample voice/facial profile, or a sample voice/facial profile + sample eye code) generated in real time and a reference voice profile (or a reference voice/facial profile, or a reference voice/facial profile + reference eye code) that has been previously stored under secure conditions in a profiling procedure, in which the reference voice profile (or the reference voice/facial profile, or the reference voice/facial profile + reference eye code) has been divided into two (or more) portions stored in the first and second authentication server devices 56, 106 (and in any additional authentication server devices).

In case that the authentication sub-system 10 is such as to authenticate the subject 7-1 by means of a biometric control, the subject 7-1 has been identified in a previous profiling procedure in a security condition, in which personal data of the subject has been acquired, such as for example his/her name, surname, telephone number, identity card and in which a reference voice profile (or the reference voice/facial profile, or the reference voice/facial profile + reference eye profile) of the subject 7-1 has been generated.

The term "reference voice profile" means a reference profile of the digital identity of the subject 7-1 associated with the reference digital audio track of the voice of the subject 7-1, wherein said reference digital audio track has been previously acquired by the subject 7-1 and stored in a profiling procedure and under secure conditions, and wherein said reference voice profile has been stored in one or more devices of the enabling sub-system 10: the reference voice profile has therefore been previously verified and is considered reliable.

Advantageously, in addition to the voice signal of the subject 7-1, in the profiling procedure one or more images representative of the face of the subject 7-1 are acquired, thus generating a "reference voice/facial profile" which is a combination of the reference digital audio track with biometric data associated with the face of the subject 7-1, in which said reference voice/facial profile has been previously acquired and stored in the profiling procedure under secure conditions, and in which said reference voice/facial profile has been stored in one or more devices of the enabling sub-system 10; for example, in the profiling procedure a video recording is acquired in which at least the face of the subject 7-1 is framed and he/she pronounces aloud a defined phrase, thus generating the reference voice/facial profile.

The term "reference eye code" means a unique code that is generated as a function of at least one biometric parameter of the eyes of the subject 7-1, by means of a suitable algorithm that takes as input one or more parameters associated with the eyes of the subject 7-1, in which said reference eye code has been previously acquired and stored in the profiling procedure under secure conditions.

Thus, the term "reference voice/facial profile + reference eye code" means data associated with a combination of the reference digital audio track of the voice of the subject 7-1, of biometric data associated with the face of the subject 7-1, and of one or more biometric parameters of the eyes of the subject 7-1 (e.g., iris colour, sclera colour, corneal colour, eye diameter, distance of the pupil from the inner corner of the eye, distance of the pupil from the outer corner of the eye, eyebrow size and shape).

The term "sample voice profile" means a sample profile of the digital identity of the subject 7-1 associated with the sample digital audio track of the voice of the subject 7-1, in which said sample digital audio track is generated by means of the conversion from analog to digital of the voice of the subject 7-1 acquired in real time (i.e. during the first payment enabling step which will be illustrated below) by means of the microphone integrated in the electronic device 8-1.

The term "sample voice/facial profile" means data associated with a combination of the sample digital audio track of the voice of the subject 7-1 and of biometric data associated with the face of the subject 7-1, the latter generated by means of an image of the face of the subject 7-1 acquired in real time (i.e. during the first payment enabling step which will be illustrated below) by means of a camera integrated into the electronic device 8-1.

The term "sample eye code" means a unique code that is generated in real time (i.e. during the first payment enabling step that will be illustrated below) as a function of at least one biometric parameter of the eyes of the subject 7-1, by means of a suitable algorithm that takes as input one or more parameters associated with the eyes of the subject 7-1.

Thus, the term "sample voice/facial profile + sample eye code" means data associated with a combination of the sample digital audio track of the voice of the subject 7-1, of biometric data associated with the face of the subject 7-1, and of one or more biometric parameters of the eyes of the subject 7-1 (e.g., iris colour, sclera colour, corneal colour, eye diameter, distance of the pupil from the inner corner of the eye, distance of the pupil from the outer corner of the eye, eyebrow size and shape).

For more details regarding the verification of the digital identity of a subject, please refer to patent application PCT/IB2021/055428, which is considered incorporated within the present disclosure.

For more details regarding the generation of a sample/reference eye code, please refer to Italian patent application no. 102021000011753 filed on May 7, 2021 in the name of the same Applicant, which is considered incorporated within the present disclosure.

With reference to figures 3A-3B, it is shown a trend over time of the messages exchanged between the several components of the electronic payment enabling system 1 according to the first embodiment of the invention.

Figures 3A-3B thus show how the payment enabling method is implemented according to the first embodiment of the invention, by means of suitable software programs run on respective processing units of the first electronic device 8-1, of the second electronic device 8-2, of the electronic devices forming the authentication sub-system 10 and of the electronic devices of the message sharing sub-system 20.

**It** can be observed that there are two steps over time:
- a first payment enabling step between the initial instant t0 and the instant t19, in which the identification of the subject 7-1 is performed by means of the verification of his/her digital identity, then a sharing of the unique operation identifier containing a money transfer command and a user identifier identifying the users involved in the payment operation is made, and finally the identification of the subject 7-2 is performed by means of the verification of his/her digital identity,
- a subsequent second step of actual payment comprised between the instant t20 and the instant t33, in which the transfer of money between a bank account of the subject 7-1 and a bank account of the subject 7-2 is performed.

In the first step, the authentication sub-system 10 has thus the function of managing the authentication of the subjects 7-1, 7-2 and of generating the value of the operation identifier, while in the second step it has the additional function of managing the actual payment relating to the money transfer: therefore, the term "authentication and payment management sub-system 10" will be used later to indicate the double function performed by the sub-system 10.

For simplicity's sake it is assumed that the electronic device 8-1 is a smartphone provided with an integrated front camera 2 and that the service requested is the transfer of a defined amount of money from the bank account of the subject 7-1 to the bank account of the subject 7-2.

It is also assumed that the message sharing sub-system 20 is implemented by means of the WhatsApp smartphone software application.

At the initial instant t0 the subject 7-1 starts a suitable software application on his/her smartphone 8-1 and begins the first payment enabling step: the processing unit of the smartphone 8-1 generates (for example after touching an icon represented on the touch screen of the smartphone 8-1) a request to generate an identifier of a money transfer command from the subject 7-1 to the subject 7-2.

Subsequently, the medium-long distance wireless transceiver of the smartphone 8-1 transmits, towards the authentication and payment management sub-system 10, a message carrying a request to generate the identifier of the money transfer command.

At the instant t1 (subsequent to t0) the authentication and payment management sub-system 10 receives said message of the request to generate the identifier of the money transfer command and a unique operation identifier is thus generated, by means of the server device 105 of the authentication and payment management sub-system 10, which contains information indicative of a money transfer command and contains a user identifier identifying the subjects 7-1 and 7-2 involved in the money transfer operation: the value of the generated operation identifier is thus stored in a memory associated with the server device 105, in which the memory can be internal to the server device 105 or can be connected externally thereto.

At the instant t2 (subsequent to t1) the authentication and payment management sub-system 10 transmits, towards the smartphone 8-1, a message carrying the value of said generated operation identifier.

At the instant t3 (subsequent to t2) the smartphone transceiver 8-1 receives the message carrying the value of the operation identifier, therefore said message is forwarded to the processing unit of the smartphone 8-1.

At the instant t4 (subsequent to t3) the processing unit of the smartphone 8-1 generates a request for verification of the digital identity of the subject 7-1 and forwards it to the wireless transceiver of the smartphone 8-1, therefore the wireless transceiver of the smartphone 8-1 transmits, towards the authentication and payment management sub-system 10, a message indicative of a request for verification of the digital identity of the subject 7-1.

At the instant t5 (subsequent to t4) the authentication and payment management sub-system 10 receives the message indicative of the request for verification of the digital identity of the subject 7-1 and a positive verification of the digital identity of the subject 7-1 is performed by means of the authentication and payment management sub-system 10.

For example, the verification of the digital identity of the subject 7-1 is performed by controlling a voice biometric profile of the subject 7-1, by performing a comparison between a sample voice profile of the subject 7-1 generated in real time and a reference voice profile of the subject 7-1 generated in a previous profiling step under secure conditions, wherein the reference voice profile has been stored in part in a memory associated with the server device 56 and in part in a memory associated with the server device 106, wherein said comparison can be made in the server device 105 or in the smartphone 8-1, as described in detail respectively in figure 3 or figure 5 of the patent application PCT/IB2021/055428.

At the instant t6 (subsequent to t5) the authentication and payment management sub-system 10 transmits, towards the smartphone 8-1, a confirmation message confirming the positive verification of the digital identity of the subject 7-1.

At the instant t7 (subsequent to t6) the wireless transceiver of the smartphone 8-1 receives the confirmation message confirming the positive verification of the digital identity of the subject 7-1, therefore said confirmation message is forwarded to the processing unit of the smartphone 8-1.

At the instant t8 (subsequent to t7) the processing unit of the smartphone 8-1 generates a request to share with the second smartphone 8-2 (and therefore with the second subject 7-2) the operation identifier containing the money transfer command and the user identifier identifying the subjects 7-1 and 7-2, therefore at the instant t9 (subsequent to t8) the wireless transceiver of the smartphone 8-1 transmits, towards the second smartphone 8-2 through the message sharing sub-system 20, a WhatsApp message carrying the value of the operation identifier containing the money transfer command and the user identifier identifying the subjects 7-1 and 7-2.

At the instant t11 (subsequent to t9) the second smartphone 8-2 of the second subject 7-2 receives, by means of a medium-long distance wireless transceiver, the WhatsApp message that carries the value of the operation identifier containing the money transfer command and containing the user identifier identifying the subjects 7-1 and 7-2, therefore said WhatsApp message is forwarded to the processing unit of the smartphone 8-2.

Subsequently, the processing unit of the smartphone 8-2 decodes the value of the operation identifier by decrypting the operation identifier, therefore extracts therefrom the information indicating that it is the money transfer command and detects that the money transfer is from the subject 7-1 to the subject 7-2.

In other words, the processing unit of the smartphone 8-2 detects that the operation identifier has been transmitted from the smartphone 8-1 of the subject 7-1 (previously identified) to the smartphone 8-2 of the subject 7-2 (who has not yet been identified) and that the money transfer command is from the subject 7-1 towards the subject 8-2: in this way the smartphone 8-2 detects that the subject 7-1 has requested (by means of his/her smartphone 8-1) a money transfer to the subject 7-2 to whom the smartphone 8-2 belongs, that is, the request for money transfer towards the subject 7-1 has been associated with the subject 7-2.

Subsequently, the processing unit of the smartphone 8-2 generates a request for verification of the digital identity of the subject 7-2 and forwards said request to the wireless transceiver of the smartphone 8-2.

At the instant t12 (subsequent to t11) the wireless transceiver of the smartphone 8-2 transmits, towards the authentication and payment management sub-system 10, a message carrying said request for verification of the digital identity of the subject 7-2.

At the instant t13 (subsequent to t12) the authentication and payment management sub-system 10 receives the message carrying said request for verification of the digital identity of the subject 7-2 and a positive verification of the digital identity of the subject 7-2 is performed by means of the authentication and payment management sub-system 10.

The verification of the digital identity of the subject 7-2 is performed similarly to that indicated above of the subject 7-1, to which reference is made for more details.

At the instant t14 (subsequent to t13) the authentication and payment management sub-system 10 transmits, towards the smartphone 8-2, a confirmation message confirming the positive verification of the digital identity of the subject 7-2.

At the instant t15 (subsequent to t14) the wireless transceiver of the smartphone 8-2 receives the message indicative of the confirmation of the positive verification of the digital identity of the subject 7-2, therefore said message is forwarded to the processing unit of the smartphone 8-2.

Subsequently, the processing unit of the smartphone 8-2 generates a request for authorisation to transfer money from the subject 7-1 to the subject 7-2 and forwards said authorisation request to the wireless transceiver of the smartphone 8-2.

Subsequently, the wireless transceiver of the smartphone 8-2 transmits, towards the authentication and payment management sub-system 10, a request message requesting an authorisation to transfer money from the subject 7-1 to the subject 7-2.

At the instant t16 (subsequent to t15), the authentication and payment management sub-system 10 receives the message carrying said request for authorisation to transfer money and the authorisation is granted to transfer money between the subject 7-1 previously identified and the subject 7-2 also previously identified: in fact, a secure point-to-point connection has been successfully established between the first smartphone 8-1 of the subject 7-1 and the second smartphone 8-2 of the subject 7-2, since both the digital identity of the subject 7-1 and the digital identity of the subject 7-2 have been previously successfully verified, and moreover the subject 7-2 has actually certified his/her identity and confirmed that he/she is the person authorised to receive the money transfer.

At the instant t17 (subsequent to t16) the authentication and payment management sub-system 10 transmits, towards the smartphone 8-1 and towards the smartphone 8-2, a respective message indicative of a positive confirmation to a point-to-point connection between the smartphone 8-1 and the smartphone 8-2, which are therefore connected directly to each other in a secure manner.

At the instant t18 (subsequent to t17) the smartphone 8-1 receives said message indicative of the positive confirmation to the point-to-point connection and similarly at the instant t19 (subsequent to t17) the smartphone 8-2 receives said message indicative of the positive confirmation to the point-to-point connection.

At the instant t20 the second step begins, in which the transfer of money is performed by means of the control performed by the authentication and payment management sub-system 10.

In particular, at the instant t20, the payment authentication and management sub-system 10 (which in the first payment enabling step received the information relating to the type of money transfer operation between the subject 7-1 and the subject 7-2 and successfully performed the verification of the digital identity of the two subjects 7-1, 7-2) transmits, towards the second payment server device 9-2, a message indicative of a request for information of the bank account of the subject 7-2.

At the instant t21 (subsequent to t20) the transceiver of the second payment server device 9-2 receives said message indicative of the request for information on the bank account of the subject 7-2 and forwards the message to the processing unit of the second payment server device 9-2, therefore the processing unit of the second payment server device 9-2 receives data indicative of the bank account of the subject 7-2, such as for example the number of his/her bank account; subsequently the processing unit of the second payment server device 9-2 forwards the data indicative of the bank account of the subject 7-2 to the transceiver of the second payment server device 9-2, which transmits (towards the authentication and payment management sub-system 10) a message carrying said data indicative of the bank account of the subject 7-2.

At the instant t23 (subsequent to t21) the authentication and payment management sub-system 10 receives the message carrying said data indicative of the bank account of the subject 7-2, thus at the instant t24 (subsequent to t23) the authentication and payment management sub-system 10 transmits, from the server device 105 towards the first payment server device 9-1, a message indicative of a request for transfer of money from the bank account of the subject 7-1 to the bank account of the subject 7-2, wherein said message also comprises the data indicative of the bank account of the subject 7-2.

At the instant t25 (subsequent to t24) the transceiver of the first payment server device 9-1 receives the message indicative of the money transfer request and forwards said message to the processing unit of the first payment server device 9-1, therefore the processing unit of the first payment server device 9-1 receives the data indicative of the bank account of the subject 7-1.

Subsequently, the processing unit of the first payment server device 9-1 forwards the data indicative of the bank account of the subject 7-1 to the transceiver, which transmits (towards the second payment server device 9-2) a message carrying said data indicative of the bank account of the subject 7-1.

At the instant t27 (subsequent to t25) the transceiver of the second payment server device 9-2 receives said message carrying the data indicative of the bank account of the subject 7-1, which are forwarded to the processing unit of the second payment server device 9-2.

Subsequently, the processing unit of the second payment server device 9-2 generates a message indicative of a confirmation of an occurred money transfer from the bank account of the subject 7-1 to the bank account of the subject 7-2 and forwards said message to the transceiver of the second payment server device 9-2, which transmits towards the first payment server device 9-1 said message indicative of a confirmation of an occurred money transfer.

At the instant t29 (subsequent to t27) the transceiver of the first payment server device 9-1 receives said message indicative of the confirmation of occurred money transfer, therefore said message is forwarded towards the authentication and payment management sub-system 10.

At the instant t30 (subsequent to t29) the authentication and payment management sub-system 10 receives said message indicative of the confirmation of occurred money transfer, thus at the instant t31 (subsequent to t30) the authentication and payment management sub-system 10 transmits, towards the smartphone 8-1 and towards the smartphone 8-2, a respective message indicative of a confirmation of occurred money transfer.

At the instant t32 (subsequent to t31) the smartphone 8-1 receives said message indicative of the confirmation of occurred money transfer and similarly at the instant t33 (subsequent to t31) the smartphone 8-2 receives said message indicative of the confirmation of occurred money transfer.

It should be noted that in figure 3A it has been shown that first the recognition of the identity of the subject 7-1 has been performed and subsequently the generation and sharing of the operation identifier are performed, but the opposite is also possible, that is, first the generation and sharing of the operation identifier are performed and subsequently the recognition of the identity of the subject 7-1 is performed.

With reference to Figure 4, it is shown an electronic system 101 to enable a payment of money by means of a point-to-point connection based on a second embodiment of the invention.

In the second embodiment, the subject 7-1 makes a payment for a good at a point of sale 108, again using a point-to-point connection with the point of sale.

The term "point of sale" 108 refers to a station (for example, a cash register) at a physical place (for example, a shop, a supermarket) where there are products for sale (for example, food products) that can be purchased by the subject 7-1 who goes to the point of sale 108, by making the payment at a cash register inside the point of sale 108 through a cashier 107 or by means of an automated cash register that does not require the presence of the cashier.

The electronic payment enabling system 101 of the second embodiment of figure 4 therefore differs from the electronic payment enabling system 1 of the first embodiment of figure 1 in that there is a point of sale 108 in place of the second electronic device 8-2 and in that there is a cashier 107 in place of the second subject 7-2.

Furthermore, the electronic payment authorisation system 101 differs from the electronic payment authorisation system 1 in that the identity of the point of sale 108 has been successfully verified in a registration step prior to that in which the payment operation is performed by the subject 7-1, therefore during the first payment enabling step the verification of the digital identity of the point of sale 108 that is believed to be reliable is not performed and the generated operation identifier is thus used to identify the identity of the subject 7-1 and to associate a payment request therewith.

The second payment server device 109 of the second embodiment has a function similar to the second payment server device 9-2 of the first embodiment, i.e. the second payment server device 109 is a payment gateway that is located at a bank or a financial institution managing payment systems and has the function of managing the payment towards the second point of sale 108; in particular, the second payment server device 109 manages a bank account belonging to the point of sale 108.

The point of sale 108 is provided with a suitable reader or with a software application capable of acquiring (for example with an optical scan) a graphic or textual representation containing the operation identifier that contains the command for the payment of a good or service and contains the user identifier identifying the subject 7-1 and the point of sale 108, in which the graphic representation containing the identifier is for example a bar code or a QR code (Quick Response).

In particular, in the second embodiment, the first electronic device 8-1 is configured to receive the confirmation message and generate therefrom a request to share the operation identifier with a point of sale 108, is configured to display, on its screen, data that contain the operation identifier containing the payment command and the user identifier identifying the subject 7-1 and the point of sale 108, and is configured to receive a message indicative of a positive or negative confirmation to a point-to-point connection between the first electronic device 8-1 and the point of sale 108.

Furthermore, in the second embodiment, the point of sale 108 is configured to acquire, by means of an optical reader, said displayed data containing the operation identifier that contains the payment command and the user identifier, is configured to extract from the displayed data the value of the operation identifier and detect that the payment was requested from the first subject 7-1 towards the point of sale 108, and is configured to transmit, towards the authentication and payment management sub-system 10, a message carrying a value indicative of an amount of money associated with the payment of the good or service.

Furthermore, in the second embodiment, the authentication and payment management sub-system 10 is configured to receive said message and generate therefrom an authorisation granted to make said payment of the good or service, and is configured to transmit, towards the first electronic device 8-1, a message indicative of a positive confirmation to a point-to-point connection between the first electronic device 8-1 and the point of sale 108.

With reference to Figures 5A-5B, it is shown a trend over time of the messages exchanged between the several components of the electronic payment enabling system 101 based on the second embodiment of the invention.

Figures 5A-5B therefore show how the payment enabling method is implemented based on the second embodiment of the invention.

It can be observed that there are two steps over time:
- a first payment enabling step comprised between the initial instant t0 and the instant t119, in which the identification of the subject 7-1 is performed by means of the verification of his/her digital identity and a generation and sharing of the operation identifier containing a money payment command and containing a user identifier identifying the users involved in the payment operation, i.e. the subject 7-1 and the point of sale 108, are performed,
- a subsequent second step of actual payment comprised between the instant t200 and the instant t303, in which the payment of money of a good or service is made.

The operation between the instants t0 and t8 of figure 5A is the same as that illustrated above for figure 3A, with the difference that data in graphic or textual form containing an operation identifier containing a money payment command (instead of the money transfer command) and containing a user identifier identifying the subject 7-1 and the point of sale 108 (instead of the subjects 7-1 and 7-2) are generated and displayed on the screen of the smartphone 8-1.

It is assumed that the data displayed (containing the operation identifier of the money payment command and the user identifier) are represented with a bar code, that the point of sale 108 is a cash register of a grocery shop in which there is a cashier 107 provided with an optical bar code reader and that the subject 7-1 wants to pay for a food product at the cash register 108.

At the instant t109 (subsequent to t8), data (for example, a bar code) that contain the operation identifier containing the money payment command and the user identifier identifying the subject 7-1 and the point of sale 108 are displayed on the screen of the smartphone 8-1.

At the instant t110 (subsequent to t109) the cashier 107 scans the bar code displayed on the screen by means of an optical reader connected with the cash register 108, therefore the bar code containing the operation identifier is acquired, the value of the operation identifier containing the money payment command and containing the user identifier identifying the subject 7-1 and the point of sale 108 is extracted therefrom (by means of an optical reader or cash register processing unit). It is thus detected (by scanning the bar code) that the operation identifier was transmitted by the smartphone 8-1 of the subject 7-1 and that the payment command is from the subject 7-1 towards the point of sale 108: in this way the cash register 108 detects that the subject 7-1 requested (by means of his/her smartphone 8-1) a payment of money towards the cash register 108, that is, the request for payment towards the point of sale 108 was associated with the subject 7-1.

At the instant t114 (subsequent to t110), the cash register 108 transmits, towards the payment authentication and management sub-system 10, a message carrying a value indicative of the amount of money associated with the payment for a good or service requested by the subject 7-1, which in the case considered is the payment for a food product.

At the instant t116 (subsequent to t114), the payment authentication and management sub-system 10 receives the message carrying said value indicative of the amount of money associated with the requested payment and the authorisation to pay for the good or service is granted, which in the case considered is the payment for a food product: in fact, a secure point-to-point connection has been successfully established between the smartphone 8-1 of the subject 7-1 and the cash register 108, since the digital identity of the subject 7-1 has been previously successfully verified and moreover the payment request has been previously associated with the subject 7-1 of the smartphone 8-1.

At the instant t117 (subsequent to t116), the payment authentication and management sub-system 10 transmits, towards the smartphone 8-1 and towards the cash register 108, a respective message indicative of a positive confirmation to a point-to-point connection between the smartphone 8-1 and the cash register 108, which are therefore connected directly to each other in a secure manner.

At the instant t118 (subsequent to t117) the smartphone 8-1 receives said message indicative of the positive confirmation to the point-to-point connection and similarly at the instant t119 (subsequent to t117) the cash register 108 receives said message indicative of the positive confirmation to the point-to-point connection.

The operation of the second step between the instants t200 and t303 of figure 5B is similar to that illustrated above between the instants t20 and t33 of figure 3B, with the difference that there is the cash register 108 in place of the second smartphone 8-2 and that the second payment server device 9-2 is the bank in which a bank account of the shop in which the cash register 108 is located has been opened.

Advantageously, an asymmetric encryption of the generated value of the operation identifier is performed to protect the operation identifier displayed on the screen of the electronic device 8-1: in this way the encrypted value of the operation identifier is anonymous, that is, the information contained in the operation identifier cannot be interpreted by a human being observing the screen of the electronic device 8-1 since they are not clear, while they can be interpreted by the optical reader and/or by the point of sale 108 in which the decryption of the acquired operation identifier is performed (by means of a public key).

According to a third embodiment of the invention (not shown in the figures), the point of sale 108 is replaced by a website of an e-commerce online virtual shop to which the subject 7-1 connects, using his/her electronic device 8-1.

The identity of the virtual shop has been successfully verified in a registration step prior to that in which the online payment operation is performed by the subject 7-1, therefore during the first payment enabling step the verification of the digital identity of the virtual shop that is believed to be reliable is not performed and therefore the generated operation identifier is used to identify the identity only of the subject 7-1 and to associate with him/her the online payment request.

In this case, the second embodiment is modified so that at the instant t109 the medium-long distance transceiver of the electronic device 8-1 transmits, towards the website of the virtual shop, a data packet (for example, on an Internet network with TCP/IP protocol) that carries the operation identifier containing the payment command for a good or service requested by the subject 7-1 and contains the user identifier identifying the first subject 7-1 and the website.

At the instant t110 the website of the virtual shop receives said data packet, extracts (from the data packet) the value of the operation identifier and then extracts (from the value of the operation identifier) the payment command for a good or service and the user identifier identifying the first subject 7-1 and the website.

At the instant t114, the website of the virtual shop transmits, towards the authentication and payment management sub-system 10, a data packet carrying a value indicative of the amount of money associated with the requested payment for the good or service.

The operation from the instant t116 continues similarly to what is illustrated above for the second embodiment.

## Claims

1. Method implemented by at least one computer for enabling a remote operation by means of a point-to-point connection, the method comprising the steps of:
a) transmitting (t0), from a first electronic device (8-1) to an electronic authentication system (10), a first message indicative of a request to generate an identifier of a point-to-point connection operation between a first subject (7-1) associated with the first electronic device (8-1) and a second subject (7-2) associated with a second electronic device (8-2);
b) receiving (t1), at the authentication system (10), the first message and generating (t2) therefrom a unique operation identifier containing information indicative of the type of point-to-point connection operation and containing a user identifier identifying the first subject (7-1) and the second subject (7-2) involved in the point-to-point connection operation;
c) transmitting (t2), from the authentication system (10) towards the first electronic device (8-1), a second message carrying a value of said generated operation identifier;
d) receiving (t3), at the first electronic device (8-1), the second message and transmitting (t4) therefrom, towards the authentication system (10), a third request message requesting the verification of a digital identity of a first subject (7-1);
e) receiving (t5), at the authentication system (10), the third request message and successfully verifying (t5), by means of the authentication system (10), the digital identity of the first subject;
f) transmitting (t6), from the authentication system (10) towards the first electronic device (8-1), a fourth confirmation message confirming the positive verification of the digital identity of the first subject (7-1);
g) receiving (t7), at the first electronic device (8-1), the fourth confirmation message and generating (t8) therefrom a request to share the operation identifier with the second electronic device (8-2) associated with a second subject (7-2);
h) transmitting (t9), from the first electronic device (8-1) towards the second electronic device (8-2) by means of a message sharing sub-system (20), a fifth message carrying a value of the operation identifier;
i) receiving (t11), at the second electronic device (8-2), the fifth message carrying the value of the operation identifier, extracting therefrom the information indicative of the type of point-to-point connection operation and the user identifier identifying the first subject (7-1) and the second subject (7-2), and detecting that the point-to-point connection operation has been requested by the first subject (7-1) towards the second subject (7-2);
j) transmitting (t12), from the second electronic device (8-2) towards the authentication system (10), a sixth request message requesting the verification of a digital identity of the second subject (7-2) associated with the second electronic device (8-2);
k) receiving (t13), at the authentication system (10), the sixth request message and successfully verifying, by means of the authentication system (10), the digital identity of the second subject;
l) transmitting (t14), from the authentication system (10) towards the second electronic device (8-2), a seventh confirmation message confirming the positive verification of the digital identity of the second subject (7-2);
m) receiving (t15), at the second electronic device (8-2), the seventh confirmation message and transmitting therefrom, towards the authentication system (10), an eighth request message requesting an authorisation of said point-to-point connection operation;
n) receiving (t16), at the authentication system (10), the eighth request message and generating therefrom a granted authorisation to perform said point-to-point connection operation;
o) transmitting, from the authentication system (10) towards the first electronic device (8-1) and/or towards the second electronic device (8-2), a ninth message indicative of a positive confirmation to the point-to-point connection operation between the first electronic device (8-1) and the second electronic device (8-2).

2. Method for enabling remote operation according to claim 1, wherein:
- in step a) the point-to-point connection operation is a money transfer operation between a bank account associated with the first subject and a bank account associated with the second subject;
- in step i) it is detected that the operation is a money transfer from the bank account of the first subject to the bank account of the second subject;
- in step m) the eighth message is a request for authorisation to transfer money from the bank account of the first subject to the bank account of the second subject;
- in step n) it is generated the granted authorisation for the money transfer from the bank account of the first subject to the bank account of the second subject.

3. Method for enabling remote operation according to claims 1 or 2, wherein the second electronic device is a point of sale (108) of a shop and the point-to-point connection operation is a payment of a good or service at the point of sale,
the method comprising, instead of steps g)-o), the steps of:
g1) receiving (t7), at the first electronic device (8-1), the fourth confirmation message and generating (t8) therefrom a request to share the operation identifier with a point of sale (108);
h1) displaying (t109), on a screen of the first electronic device (8-1), data containing the operation identifier containing a payment command and the user identifier identifying the subject (7-1) and the point of sale (108);
i1) acquiring (t110), at the point of sale (108) by means of an optical reader, said displayed data containing the operation identifier containing the payment command and the user identifier, extracting from the displayed data the value of the operation identifier and detecting that the payment has been requested by the first subject (7-1) towards the point of sale (108);
j1) transmitting (t114), from the point of sale (108) to the authentication sub-system (10), a message carrying a value indicative of an amount of money associated with the payment of the good or service;
k1) receiving (t116), at the authentication sub-system (10), said message and generating therefrom a granted authorisation to perform said payment of the good or service;
l1) transmitting, from the authentication system (10) towards the first electronic device (8-1), a message indicative of a positive confirmation to a point-to-point connection between the first electronic device (8-1) and the point of sale (108).

4. Method for enabling remote operation according to claims 1 or 2, wherein the second electronic device is a virtual shop having a website for online purchases of a good or service and the operation is an online payment of a good or service,
the method comprising, instead of steps g)-o), the steps of:
g2) receiving (t7), at the first electronic device (8-1), the fourth confirmation message and generating (t8) therefrom a request to share the operation identifier with the website of the virtual shop;
h2) transmitting, from the first electronic device (8-1) towards the website via a telecommunications network, a data packet carrying the operation identifier containing a payment command for a good or service and the user identifier identifying the first subject (7-1) and the website;
i2) receiving, at the website, said data packet, extracting therefrom a value of the operation identifier, extracting therefrom the payment command and user identifier and detecting that the payment has been requested by the first subject (7-1) towards the website;
j2) transmitting, from the website of the virtual shop to the authentication system (10), a message carrying a value indicative of an amount of money associated with the payment of the good or service;
k2) receiving, at the authentication system (10), said message and generating therefrom a granted authorisation to perform said payment of the good or service;
l2) transmitting, from the authentication system (10) towards the first electronic device (8-1), a message indicative of a positive confirmation to a point-to-point connection between the first electronic device (8-1) and the website of the virtual shop.

5. Method for enabling remote operation according to claim 1, wherein the operation identifier is a web link.

6. Method for enabling remote operation according to any one of the preceding claims, wherein the first electronic device is a mobile device, selected from a smartphone, a tablet, an iPhone, an iPad.

7. Non-transitory computer-readable storage medium having a program comprising software code portions adapted to perform the steps of the method according to claims 1-6, when said program is run on at least one computer.

8. Electronic system to enable a remote operation by means of a point-to-point connection, the system comprising a first electronic device (8-1), a second electronic device (8-2), an authentication sub-system (10) connected with the first and second electronic devices, a message sharing sub-system (20) to connect the first electronic device (8-1) with the second electronic device (8-2) to each other via a medium-long distance telecommunications network (20),
wherein the first electronic device (8-1) is configured to:
- transmit (t0), towards the authentication sub-system (10), a first message indicative of a request to generate an identifier of a point-to-point connection operation between a first subject (7-1) associated with the first electronic device (8-1) and a second subject (7-2) associated with the second electronic device (8-2);
- receive (t3) a second message carrying a value of a unique operation identifier containing information indicative of the type of point-to-point connection operation and containing a user identifier identifying the first subject (7-1) and a second subject (7-2) involved in the point-to-point connection operation, and transmit (t4) therefrom, towards the authentication sub-system (10), a third request message requesting the verification of a digital identity of a first subject (7-1);
- receive (t7) a fourth confirmation message confirming the positive verification of the digital identity of the first subject and generate (t8) therefrom a request to share the unique identifier with a second electronic device (8-2);
- transmit (t9), towards the second electronic device (8-2), a fifth message carrying a value of the operation identifier;
- receive (t18) a sixth message indicative of a positive or negative confirmation to a point-to-point connection between the first electronic device (8-1) and the second electronic device (8-2);
wherein the authentication sub-system (10) is configured to:
- receive (t1) the first message and generate (t2) therefrom said unique operation identifier containing information indicative of the type of point-to-point connection operation and containing the user identifier identifying the first subject (7-1) and the second subject (7-2) involved in the point-to-point connection operation;
- transmit (t2), towards the first electronic device (8-1), the second message carrying the value of said generated operation identifier;
- receive (t5) the third request message and successfully verify (t5), by means of the authentication sub-system (10), the digital identity of the first subject;
- transmit (t6), towards the first electronic device (8-1), the fourth confirmation message confirming the positive verification of the digital identity of the first subject (7-1);
- receive (t13) a seventh request message requesting the verification of a digital identity of a second subject (7-2) and successfully verify, by means of the authentication sub-system (10), the digital identity of the second subject;
- transmit (t14), towards the second electronic device (8-2), an eighth confirmation message confirming the positive verification of the digital identity of the second subject (7-2);
- receive (t16) a ninth request message requesting an authorisation of said point-to-point connection operation and generate therefrom a granted authorisation to perform said point-to-point connection operation;
- transmit (t17), towards the first electronic device (8-1) and/or towards the second electronic device (8-2), the sixth message indicative of the positive or negative confirmation to the point-to-point connection between the first electronic device (8-1) and the second electronic device (8-2);
wherein the message sharing sub-system (20) is configured to forward, from the first electronic device (8-1) towards the second electronic device (8-2), the fifth message carrying a value of said operation identifier;
and wherein the second electronic device (8-2) is configured to:
- receive (t11) the fifth message carrying the value of the operation identifier, extract therefrom the information indicative of the type of point-to-point connection operation and
the user identifier identifying the first subject (7-1) and the second subject (7-2), and detect that the point-to-point connection operation has been requested by the first subject (7-1) towards the second subject (7-2);
- transmit (t12), towards the authentication sub-system (10), the seventh request message requesting the verification of the digital identity of the second subject (7-2) associated with the second electronic device (8-2);
- receive (t15) the eighth confirmation message and transmit therefrom, towards the authentication sub-system (10), the ninth request message requesting the authorisation of said point-to-point connection operation;
- receive (t19) the sixth message indicative of the positive or negative confirmation to a point-to-point connection between the first electronic device (8-1) and the second electronic device (8-2).

9. Electronic system according to claim 8, wherein the point-to-point connection operation is a money transfer operation between a bank account associated with the first subject and a bank account associated with the second subject,
wherein the second electronic device (8-2) is further configured to:
- detect that the operation is a money transfer from the bank account of the first subject to the bank account of the second subject;
- transmit the eighth request message requesting an authorisation to transfer money from the bank account of the first subject to the bank account of the second subject;
wherein the authentication system is further configured to generate therefrom a granted authorisation to transfer money from the bank account of the first subject to the bank account of the second subject.

10. Electronic system according to claim 8, wherein the second electronic device is a point of sale (108) of a shop and the point-to-point connection operation is a payment of a good or service at the point of sale,
wherein the first electronic device (8-1) is configured to:
- receive (t7) the fourth confirmation message and generate (t8) therefrom a request to share the operation identifier with a point of sale (108);
- display (t109), on its screen, data containing the operation identifier containing the payment command and the user identifier identifying the subject (7-1) and the point of sale (108);
- receive a message indicative of a positive or negative confirmation to a point-to-point connection between the first electronic device (8-1) and the point of sale (108);
and wherein the point of sale (108) is configured to:
- acquire (t110), by means of an optical reader, said displayed data containing the operation identifier containing the payment command and the user identifier, extract the value of the operation identifier from the displayed data and detect that the payment has been requested by the first subject (7-1) towards the point of sale (108);
- transmit (t114), towards the authentication sub-system (10), a message carrying a value indicative of an amount of money associated with the payment of the good or service;
and wherein the authentication sub-system (10) is configured to:
- receive (t116) said message and generate therefrom a granted authorisation to perform said payment of the good or service;
- transmit, towards the first electronic device (8-1), said message indicative of a positive or negative confirmation to a point-to-point connection between the first electronic device (8-1) and the point of sale (108).

11. Electronic system according to claim 8, wherein the second electronic device is a virtual shop having a website for online purchases of a good or service and the payment operation is an online payment of a good or service,
wherein the first electronic device (8-1) is configured to:
- receive (t7) the fourth confirmation message and generate (t8) therefrom a request to share the operation identifier with the website;
- transmit, from the first electronic device (8-1) towards the website via a telecommunications network, a data packet carrying the operation identifier containing a payment command for a good or service and the user identifier identifying the first subject (7-1) and the website;
- receive a message indicative of a positive or negative confirmation to a point-to-point connection between the first electronic device (8-1) and the website;
and wherein the website is configured to:
- receive said data packet, extract a value of the operation identifier therefrom, extract the payment command and the user identifier therefrom and detect that the payment has been requested by the first subject (7-1) towards the website;
- transmit, towards the authentication sub-system (10), a message carrying a value indicative of an amount of money associated with the payment of the good or service;
and wherein the authentication sub-system (10) is configured to:
- receive (t116) said message and generate therefrom a granted authorisation to perform said payment of the good or service;
- transmit, towards the first electronic device (8-1), said message indicative of the positive or negative confirmation to the point-to-point connection between the first electronic device (8-1) and the website.

## Patentansprüche

1. Verfahren, das von mindestens einem Computer implementiert wird, um eine Fernbedienung mittels einer Punkt-zu-Punkt-Verbindung zu ermöglichen, wobei das Verfahren die folgenden Schritte umfasst:
a) Übertragen (t0), von einer ersten elektronischen Vorrichtung (8-1) an ein elektronisches Authentifizierungssystem (10), einer ersten Nachricht, die eine Anforderung zum Generieren einer Kennung einer Punkt-zu-Punkt-Verbindungsbedienung zwischen einem ersten Subjekt (7-1), das der ersten elektronischen Vorrichtung (8-1) zugeordnet ist, und einem zweiten Subjekt (7-2), das einer zweiten elektronischen Vorrichtung (8-2) zugeordnet ist, angibt;
b) Empfangen (t1), am Authentifizierungssystem, der ersten Nachricht (10) und Generieren (t2) daraus einer eindeutigen Bedienungskennung, die Informationen enthält, die die Art der Punkt-zu-Punkt-Verbindungsbedienung angeben, und die eine Benutzerkennung enthält, die das erste Subjekt (7-1) und das zweite Subjekt (7-2) identifiziert, die an der Punkt-zu-Punkt-Verbindungsbedienung beteiligt sind;
c) Übertragen (t2), von dem Authentifizierungssystem (10) zu der ersten elektronischen Vorrichtung (8-1), einer zweiten Nachricht, die einen Wert der generierten Bedienungskennung trägt;
d) Empfangen (t3), an der ersten elektronischen Vorrichtung (8-1), der zweiten Nachricht und Übertragen (t4) daraus, an das Authentifizierungssystem (10), einer dritten Anforderungsnachricht, die die Verifizierung einer digitalen Identität eines ersten Subjekts (7-1) anfordert;
e) Empfangen (t5), am Authentifizierungssystem (10), der dritten Anforderungsnachricht und erfolgreiches Verifizieren (t5), mittels des Authentifizierungssystems (10), der digitalen Identität des ersten Subjekts;
f) Übertragen (t6), von dem Authentifizierungssystem (10) zu der ersten elektronischen Vorrichtung (8-1), einer vierten Bestätigungsnachricht, die die positive Verifizierung der digitalen Identität des ersten Subjekts (7-1) bestätigt;
g) Empfangen (t7), an der ersten elektronischen Vorrichtung (8-1), der vierten Bestätigungsnachricht und Generieren (t8) daraus einer Anforderung, die Bedienungskennung mit der zweiten elektronischen Vorrichtung (8-2) zu teilen, die einem zweiten Subjekt (7-2) zugeordnet ist;
h) Übertragen (t9), von der ersten elektronischen Vorrichtung (8-1) zu der zweiten elektronischen Vorrichtung (8-2) mittels eines Nachrichtenaustauschsubsystems (20), einer fünften Nachricht, die einen Wert der Bedienungskennung trägt;
i) Empfangen (t11), an der zweiten elektronischen Vorrichtung (8-2), der fünften Nachricht, die den Wert der Bedienungskennung trägt, Extrahieren daraus der Informationen, die die Art der Punkt-zu-Punkt-Verbindungsbedienung und die Benutzerkennung angeben, die das erste Subjekt (7-1) und das zweite Subjekt (7-2) identifiziert, und Erkennen, dass die Punkt-zu-Punkt-Verbindungsbedienung von dem ersten Subjekt (7-1) gegenüber dem zweiten Subjekt (7-2) angefordert wurde;
j) Übertragen (t12), von der zweiten elektronischen Vorrichtung (8-2) zu dem Authentifizierungssystem (10), einer sechsten Anforderungsnachricht, die die Verifizierung einer digitalen Identität des zweiten Subjekts (7-2) anfordert, das der zweiten elektronischen Vorrichtung (8-2) zugeordnet ist;
k) Empfangen (t13), am Authentifizierungssystem (10), der sechsten Anforderungsnachricht und erfolgreiches Verifizieren, mittels des Authentifizierungssystems (10), der digitalen Identität des zweiten Subjekts;
l) Übertragen (t14), von dem Authentifizierungssystem (10) zu der zweiten elektronischen Vorrichtung (8-2), einer siebten Bestätigungsnachricht, die die positive Verifizierung der digitalen Identität des zweiten Subjekts (7-2) bestätigt;
m) Empfangen (t15), an der zweiten elektronischen Vorrichtung (8-2), der siebten Bestätigungsnachricht und Übertragen daraus, an das Authentifizierungssystem (10), einer achten Anforderungsnachricht, die eine Berechtigung der Punkt-zu-Punkt-Verbindungsbedienung anfordert;
n) Empfangen (t16), am Authentifizierungssystem (10), der achten Anforderungsnachricht und Generieren daraus einer erteilten Berechtigung, die Punkt-zu-Punkt-Verbindungsbedienung durchzuführen;
o) Übertragen, von dem Authentifizierungssystem (10) zu der ersten elektronischen Vorrichtung (8-1) und/oder zu der zweiten elektronischen Vorrichtung (8-2), einer neunten Nachricht, die eine positive Bestätigung zu der Punkt-zu-Punkt-Verbindungsbedienung zwischen der ersten elektronischen Vorrichtung (8-1) und der zweiten elektronischen Vorrichtung (8-2) angibt.

2. Verfahren zur Ermöglichung einer Fernbedienung nach Anspruch 1, wobei:
- in Schritt a) die Punkt-zu-Punkt-Verbindungsbedienung eine Geldüberweisungsbedienung zwischen einem Bankkonto, das dem ersten Subjekt zugeordnet ist, und einem Bankkonto, das dem zweiten Subjekt zugeordnet ist, ist;
- in Schritt i) erkennt wird, dass es sich bei der Bedienung um eine Geldüberweisung von dem Bankkonto des ersten Subjekts auf das Bankkonto des zweiten Subjekts handelt;
- in Schritt m) die achte Nachricht eine Anforderung auf Berechtigung zum Überweisen von Geld von dem Bankkonto des ersten Subjekts auf das Bankkonto des zweiten Subjekts ist;
- in Schritt n) die erteilte Berechtigung für die Geldüberweisung von dem Bankkonto des ersten Subjekts auf das Bankkonto des zweiten Subjekts generiert wird.

3. Verfahren zur Ermöglichung einer Fernbedienung nach Anspruch 1 oder 2, wobei die zweite elektronische Vorrichtung eine Verkaufsstelle (108) eines Shops ist und die Punkt-zu-Punkt-Verbindungsbedienung eine Zahlung einer Ware oder Dienstleistung an der Verkaufsstelle ist,
wobei das Verfahren anstelle der Schritte g)-o) die folgenden Schritte umfasst:
g1) Empfangen (t7), an der ersten elektronischen Vorrichtung (8-1), der vierten Bestätigungsnachricht und Generieren (t8) daraus einer Anforderung, die Bedienungskennung mit einer Verkaufsstelle (108) zu teilen;
h1) Anzeigen (t109), auf einem Bildschirm der ersten elektronischen Vorrichtung (8-1), von Daten, die die Bedienungskennung, die einen Zahlungsbefehl enthält, und die Benutzerkennung, die das Subjekt (7-1) und die Verkaufsstelle (108) identifiziert, enthalten;
i1) Erfassen (t110), an der Verkaufsstelle (108) mittels eines optischen Lesegeräts, der angezeigten Daten, die die Bedienungskennung enthalten, die den Zahlungsbefehl und die Benutzerkennung enthält, Extrahieren des Werts der Bedienungskennung aus den angezeigten Daten und Erkennen, dass die Zahlung von dem ersten Subjekt (7-1) an die Verkaufsstelle (108) angefordert wurde;
j1) Übertragen (t114), von der Verkaufsstelle (108) an das Authentifizierungssubsystem (10), einer Nachricht, die einen Wert trägt, der einen Geldbetrag angibt, der der Zahlung der Ware oder Dienstleistung zugeordnet ist;
k1) Empfangen (t116), am Authentifizierungssubsystem (10), der Nachricht und Generieren daraus einer erteilten Berechtigung, die Zahlung der Ware oder Dienstleistung durchzuführen;
l1) Übertragen, von dem Authentifizierungssystem (10) zu der ersten elektronischen Vorrichtung (8-1), einer Nachricht, die eine positive Bestätigung zu einer Punkt-zu-Punkt-Verbindungsbedienung zwischen der ersten elektronischen Vorrichtung (8-1) und der Verkaufsstelle (108) angibt.

4. Verfahren zur Ermöglichung einer Fernbedienung nach Anspruch 1 oder 2, wobei die zweite elektronische Vorrichtung ein virtueller Shop mit einer Website für Online-Käufe einer Ware oder Dienstleistung ist und die Bedienung eine Online-Zahlung einer Ware oder Dienstleistung ist,
wobei das Verfahren anstelle der Schritte g)-o) die folgenden Schritte umfasst:
g2) Empfangen (t7), an der ersten elektronischen Vorrichtung (8-1), der vierten Bestätigungsnachricht und Generieren (t8) daraus einer Anforderung, die Bedienungskennung mit der Website des virtuellen Shops zu teilen;
h2) Übertragen, von der ersten elektronischen Vorrichtung (8-1) über ein Telekommunikationsnetz an die Website, eines Datenpakets, das die Bedienungskennung, die einen Zahlungsbefehl für eine Ware oder Dienstleistung enthält, und die Benutzerkennung, die das erste Subjekt (7-1) und die Website identifiziert, enthält;
i2) Empfangen, auf der Website, des Datenpakets, Extrahieren daraus eines Werts der Bedienungskennung, Extrahieren daraus des Zahlungsbefehls und der Benutzerkennung und Erkennen, dass die Zahlung von dem ersten Subjekt (7-1) gegenüber der Website angefordert wurde;
j2) Übertragen, von der Website des virtuellen Shops an das Authentifizierungssystem (10), einer Nachricht, die einen Wert trägt, der einen Geldbetrag angibt, der der Zahlung der Ware oder Dienstleistung zugeordnet ist;
k2) Empfangen, am Authentifizierungssystem (10), der Nachricht und Generieren daraus einer erteilten Berechtigung, die Zahlung der Ware oder Dienstleistung durchzuführen;
l2) Übertragen, von dem Authentifizierungssystem (10) zu der ersten elektronischen Vorrichtung (8-1), einer Nachricht, die eine positive Bestätigung zu einer Punkt-zu-Punkt-Verbindung zwischen der ersten elektronischen Vorrichtung (8-1) und der Website des virtuellen Shops angibt.

5. Verfahren zur Ermöglichung einer Fernbedienung nach Anspruch 1, wobei die Bedienungskennung ein Weblink ist.

6. Verfahren zur Ermöglichung einer Fernbedienung nach einem der vorhergehenden Ansprüche, wobei die erste elektronische Vorrichtung eine mobile Vorrichtung ist, die aus einem Smartphone, einem Tablet, einem iPhone, einem iPad ausgewählt ist.

7. Nichtflüchtiges computerlesbares Speichermedium, aufweisend ein Programm, das Softwarecodeabschnitte umfasst, die dazu ausgelegt sind, die Schritte des Verfahrens nach einem der Ansprüche 1-6 durchzuführen, wenn das Programm auf einem Computer ausgeführt wird.

8. Elektronisches System zur Ermöglichung einer Fernbedienung mittels einer Punkt-zu-Punkt-Verbindung, wobei das System eine erste elektronische Vorrichtung (8-1), eine zweite elektronische Vorrichtung (8-2), ein Authentifizierungssubsystem (10), das mit der ersten und der zweiten elektronischen Vorrichtung verbunden ist, ein Nachrichtenaustauschsubsystem (20) zum Verbinden der ersten elektronischen Vorrichtung (8-1) mit der zweiten elektronischen Vorrichtung (8-2) miteinander über ein Telekommunikationsnetz (20) für mittellange Entfernung umfasst,
wobei die erste elektronische Vorrichtung (8-1) zu Folgendem konfiguriert ist:
- Übertragen (t0), an das Authentifizierungssubsystem (10), einer ersten Nachricht, die eine Anforderung zum Generieren einer Kennung einer Punkt-zu-Punkt-Verbindungsbedienung zwischen einem ersten Subjekt (7-1), das der ersten elektronischen Vorrichtung (8-1) zugeordnet ist, und einem zweiten Subjekt (7-2), das der zweiten elektronischen Vorrichtung (8-2) zugeordnet ist, angibt;
- Empfangen (t3) einer zweiten Nachricht, die einen Wert einer eindeutigen Bedienungskennung trägt, die Informationen enthält, die die Art der Punkt-zu-Punkt-Verbindungsbedienung angeben, und die eine Benutzerkennung enthält, die das erste Subjekt (7-1) und ein zweites Subjekt (7-2) identifiziert, die an der Punkt-zu-Punkt-Verbindungsbedienung beteiligt sind, und Übertragen (t4) daraus, an das Authentifizierungssubsystem (10), einer dritten Anforderungsnachricht, die die Verifizierung einer digitalen Identität eines ersten Subjekts (7-1) anfordert;
- Empfangen (t7) einer vierten Bestätigungsnachricht, die die positive Verifizierung der digitalen Identität des ersten Subjekts bestätigt, und Generieren (t8) daraus einer Anforderung, die eindeutige Kennung mit einer zweiten elektronischen Vorrichtung (8-2) zu teilen;
- Übertragen (t9), an die zweite elektronische Vorrichtung (8-2), einer fünften Nachricht, die einen Wert der Bedienungskennung trägt;
- Empfangen (t18) einer sechsten Nachricht, die eine positive oder negative Bestätigung zu einer Punkt-zu-Punkt-Verbindung zwischen der ersten elektronischen Vorrichtung (8-1) und der zweiten elektronischen Vorrichtung (8-2) angibt;
wobei das Authentifizierungssubsystem (10) zu Folgendem konfiguriert ist:
- Empfangen (t1) der ersten Nachricht und Generieren (t2) daraus der eindeutigen Bedienungskennung, die Informationen enthält, die die Art der Punkt-zu-Punkt-Verbindungsbedienung angeben, und die die Benutzerkennung enthält, die das erste Subjekt (7-1) und das zweite Subjekt (7-2) identifiziert, die an der Punkt-zu-Punkt-Verbindungsbedienung beteiligt sind;
- Übertragen (t2), an die erste elektronische Vorrichtung (8-1), der zweiten Nachricht, die den Wert der generierten Bedienungskennung trägt;
- Empfangen (t5) der dritten Anforderungsnachricht und erfolgreiches Verifizieren (t5), mittels des Authentifizierungssubsystems (10), der digitalen Identität des ersten Subjekts;
- Übertragen (t6), an die erste elektronische Vorrichtung (8-1), der vierten Bestätigungsnachricht, die die positive Verifizierung der digitalen Identität des ersten Subjekts (7-1) bestätigt;
- Empfangen (t13) einer siebten Anforderungsnachricht, die die Verifizierung einer digitalen Identität eines zweiten Subjekts (7-2) anfordert, und erfolgreiches Verifizieren, mittels des Authentifizierungssubsystems (10), der digitalen Identität des zweiten Subjekts;
- Übertragen (t14), an die zweite elektronische Vorrichtung (8-2), einer achten Bestätigungsnachricht, die die positive Verifizierung der digitalen Identität des zweiten Subjekts (7-2) bestätigt;
- Empfangen (t16) einer neunten Anforderungsnachricht, die eine Berechtigung der Punkt-zu-Punkt-Verbindungsbedienung anfordert, und Generieren daraus einer erteilten Berechtigung, die Punkt-zu-Punkt-Verbindungsbedienung durchzuführen;
- Übertragen (t17), an die erste elektronische Vorrichtung (8-1) und/oder an die zweite elektronische Vorrichtung (8-2), der sechsten Nachricht, die die positive oder negative Bestätigung zu der Punkt-zu-Punkt-Verbindung zwischen der ersten elektronischen Vorrichtung (8-1) und der zweiten elektronischen Vorrichtung (8-2) angibt;
wobei das Nachrichtenaustauschsubsystem (20) konfiguriert ist, um von der ersten elektronischen Vorrichtung (8-1) zu der zweiten elektronischen Vorrichtung (8-2) die fünfte Nachricht weiterzuleiten, die einen Wert der Bedienungskennung trägt;
und wobei die zweite elektronische Vorrichtung (8-2) zu Folgendem konfiguriert ist:
- Empfangen (t11) der fünften Nachricht, die den Wert der Bedienungskennung trägt, Extrahieren daraus der Informationen, die die Art der Punkt-zu-Punkt-Verbindungsbedienung und die Benutzerkennung angeben, die das erste Subjekt (7-1) und das zweite Subjekt (7-2) identifiziert, und Erkennen, dass die Punkt-zu-Punkt-Verbindungsbedienung von dem ersten Subjekt (7-1) gegenüber dem zweiten Subjekt (7-2) angefordert wurde;
- Übertragen (t12), an das Authentifizierungssubsystem (10), der siebten Anforderungsnachricht, die die Verifizierung der digitalen Identität des zweiten Subjekts (7-2) anfordert, das der zweiten elektronischen Vorrichtung (8-2) zugeordnet ist;
- Empfangen (t15) der achten Bestätigungsnachricht und Übertragen daraus, an das Authentifizierungssubsystem (10), der neunten Anforderungsnachricht, die die Berechtigung der Punkt-zu-Punkt-Verbindungsbedienung anfordert;
- Empfangen (t19) der sechsten Nachricht, die die positive oder negative Bestätigung zu einer Punkt-zu-Punkt-Verbindung zwischen der ersten elektronischen Vorrichtung (8-1) und der zweiten elektronischen Vorrichtung (8-2) angibt.

9. Elektronisches System nach Anspruch 8, wobei die Punkt-zu-Punkt-Verbindungsbedienung eine Geldüberweisungsbedienung zwischen einem Bankkonto, das dem ersten Subjekt zugeordnet ist, und einem Bankkonto, das dem zweiten Subjekt zugeordnet ist, ist,
wobei die zweite elektronische Vorrichtung (8-2) ferner zu Folgendem konfiguriert ist:
- Erkennen, dass es sich bei der Bedienung um eine Geldüberweisung von dem Bankkonto des ersten Subjekts auf das Bankkonto des zweiten Subjekts handelt;
- Übertragen der achten Anforderungsnachricht, die eine Berechtigung zum Überweisen von Geld von dem Bankkonto des ersten Subjekts auf das Bankkonto des zweiten Subjekts anfordert;
wobei das Authentifizierungssystem ferner dazu konfiguriert ist, daraus eine erteilte Berechtigung zum Überweisen von Geld von dem Bankkonto des ersten Subjekts auf das Bankkonto des zweiten Subjekts zu generieren.

10. Elektronisches System nach Anspruch 8, wobei die zweite elektronische Vorrichtung eine Verkaufsstelle (108) eines Shops ist und die Punkt-zu-Punkt-Verbindungsbedienung eine Zahlung einer Ware oder Dienstleistung an der Verkaufsstelle ist,
wobei die erste elektronische Vorrichtung (8-1) zu Folgendem konfiguriert ist:
- Empfangen (t7) der vierten Bestätigungsnachricht und Generieren (t8) daraus einer Anforderung, die Bedienungskennung mit einer Verkaufsstelle (108) zu teilen;
- Anzeigen (t109), auf ihrem Bildschirm, von Daten, die die Bedienungskennung enthalten, die den Zahlungsbefehl und die Benutzerkennung enthält, die das Subjekt (7-1) und die Verkaufsstelle (108) identifiziert;
- Empfangen einer Nachricht, die eine positive oder negative Bestätigung zu einer Punkt-zu-Punkt-Verbindung zwischen der ersten elektronischen Vorrichtung (8-1) und der Verkaufsstelle (108) angibt;
und wobei die Verkaufsstelle (108) zu Folgendem konfiguriert ist:
- Erfassen (t110), mittels eines optischen Lesegeräts, der angezeigten Daten, die die Bedienungskennung enthalten, die den Zahlungsbefehl und die Benutzerkennung enthält, Extrahieren des Werts der Bedienungskennung aus den angezeigten Daten und Erkennen, dass die Zahlung von dem ersten Subjekt (7-1) an die Verkaufsstelle (108) angefordert wurde;
- Übertragen (t114), an das Authentifizierungssubsystem (10), einer Nachricht, die einen Wert trägt, der einen Geldbetrag angibt, der der Zahlung der Ware oder Dienstleistung zugeordnet ist;
und wobei das Authentifizierungssubsystem (10) zu Folgendem konfiguriert ist:
- Empfangen (t116) der Nachricht und Generieren daraus einer erteilten Berechtigung, die Zahlung der Ware oder Dienstleistung durchzuführen;
- Übertragen, an die erste elektronische Vorrichtung (8-1), der Nachricht, die eine positive oder negative Bestätigung zu einer Punkt-zu-Punkt-Verbindung zwischen der ersten elektronischen Vorrichtung (8-1) und der Verkaufsstelle (108) angibt.

11. Elektronisches System nach Anspruch 8, wobei die zweite elektronische Vorrichtung ein virtueller Shop mit einer Website für Online-Käufe einer Ware oder Dienstleistung ist und die Zahlungsbedienung eine Online-Zahlung einer Ware oder Dienstleistung ist,
wobei die erste elektronische Vorrichtung (8-1) zu Folgendem konfiguriert ist:
- Empfangen (t7) der vierten Bestätigungsnachricht und Generieren (t8) daraus einer Anforderung, die Bedienungskennung mit der Website zu teilen;
- Übertragen, von der ersten elektronischen Vorrichtung (8-1) über ein Telekommunikationsnetz an die Website, eines Datenpakets, das die Bedienungskennung, die einen Zahlungsbefehl für eine Ware oder Dienstleistung enthält, und die Benutzerkennung, die das erste Subjekt (7-1) und die Website identifiziert, enthält;
- Empfangen einer Nachricht, die eine positive oder negative Bestätigung zu einer Punkt-zu-Punkt-Verbindung zwischen der ersten elektronischen Vorrichtung (8-1) und der Website angibt;
und wobei die Website zu Folgendem konfiguriert ist:
- Empfangen des Datenpakets, Extrahieren eines Werts der Bedienungskennung daraus, Extrahieren des Zahlungsbefehls und der Benutzerkennung daraus und Erkennen, dass die Zahlung von dem ersten Subjekt (7-1) gegenüber der Website angefordert wurde;
- Übertragen, an das Authentifizierungssubsystem (10), einer Nachricht, die einen Wert trägt, der einen Geldbetrag angibt, der der Zahlung der Ware oder Dienstleistung zugeordnet ist;
und wobei das Authentifizierungssubsystem (10) zu Folgendem konfiguriert ist:
- Empfangen (t116) der Nachricht und Generieren daraus einer erteilten Berechtigung, die Zahlung der Ware oder Dienstleistung durchzuführen;
- Übertragen, an die erste elektronische Vorrichtung (8-1), der Nachricht, die die positive oder negative Bestätigung zu der Punkt-zu-Punkt-Verbindung zwischen der ersten elektronischen Vorrichtung (8-1) und der Website angibt.

## Revendications

1. Procédé mis en œuvre par au moins un ordinateur pour permettre une opération à distance au moyen d'une connexion point à point, le procédé comprenant les étapes de :
a) transmettre (t0), d'un premier dispositif électronique (8-1) à un système d'authentification électronique (10), un premier message indicatif d'une demande de génération d'un identifiant d'une opération de connexion point à point entre un premier sujet (7-1) associé au premier dispositif électronique (8-1) et un second sujet (7-2) associé à un second dispositif électronique (8-2) ;
b) recevoir (t1), au niveau du système d'authentification (10), le premier message et générer (t2) à partir de celui-ci un identifiant d'opération unique contenant des informations indicatives du type d'opération de connexion point à point et contenant un identifiant d'utilisateur identifiant le premier sujet (7-1) et le second sujet (7-2) impliqués dans l'opération de connexion point à point ;
c) transmettre (t2), du système d'authentification (10) vers le premier dispositif électronique (8-1), un deuxième message porteur d'une valeur dudit identifiant d'opération généré ;
d) recevoir (t3), au niveau du premier dispositif électronique (8-1), le deuxième message et transmettre (t4) à partir de celui-ci, vers le système d'authentification (10), un troisième message de demande demandant la vérification d'une identité numérique d'un premier sujet (7-1) ;
e) recevoir (t5), au niveau du système d'authentification (10), le troisième message de demande et vérifier avec succès (t5), au moyen du système d'authentification (10), l'identité numérique du premier sujet ;
f) transmettre (t6), du système d'authentification (10) vers le premier dispositif électronique (8-1), un quatrième message de confirmation confirmant la vérification positive de l'identité numérique du premier sujet (7-1) ;
g) recevoir (t7), au niveau du premier dispositif électronique (8-1), le quatrième message de confirmation et générer (t8) à partir de celui-ci une demande de partage de l'identifiant d'opération avec le second dispositif électronique (8-2) associé à un second sujet (7-2) ;
h) transmettre (t9), du premier dispositif électronique (8-1) vers le second dispositif électronique (8-2), au moyen d'un sous-système de partage (20) de messages, un cinquième message porteur d'une valeur de l'identifiant d'opération ;
i) recevoir (t11), au niveau du second dispositif électronique (8-2), le cinquième message porteur de la valeur de l'identifiant d'opération, extraire à partir de celui-ci les informations indicatives du type d'opération de connexion point à point et l'identifiant d'utilisateur identifiant le premier sujet (7-1) et le second sujet (7-2), et détecter que l'opération de connexion point à point a été demandée par le premier sujet (7-1) vers le second sujet (7-2) ;
j) transmettre (t12), du second dispositif électronique (8-2) vers le système d'authentification (10), un sixième message de demande demandant la vérification d'une identité numérique du second sujet (7-2) associé au second dispositif électronique (8-2) ;
k) recevoir (t13), au niveau du système d'authentification (10), le sixième message de demande et vérifier avec succès, au moyen du système d'authentification (10), l'identité numérique du second sujet ;
l) transmettre (t14), du système d'authentification (10) vers le second dispositif électronique (8-2), un septième message de confirmation confirmant la vérification positive de l'identité numérique du second sujet (7-2) ;
m) recevoir (t15), au niveau du second dispositif électronique (8-2), le septième message de confirmation et transmettre à partir de celui-ci, vers le système d'authentification (10), un huitième message de demande demandant une autorisation de ladite opération de connexion point à point ;
n) recevoir (t16), au niveau du système d'authentification (10), le huitième message de demande et générer à partir de celui-ci une autorisation accordée pour effectuer ladite opération de connexion point à point ;
o) transmettre, à partir du système d'authentification (10) vers le premier dispositif électronique (8-1) et/ou vers le second dispositif électronique (8-2), un neuvième message indicatif d'une confirmation positive de l'opération à la connexion point à point entre le premier dispositif électronique (8-1) et le second dispositif électronique (8-2).

2. Procédé pour permettre une opération à distance selon la revendication 1, dans lequel :
- à l'étape a), l'opération de connexion point à point est une opération de transfert d'argent entre un compte bancaire associé au premier sujet et un compte bancaire associé au second sujet ;
- à l'étape i), il est détecté que l'opération est un transfert d'argent du compte bancaire du premier sujet vers le compte bancaire du second sujet ;
- à l'étape m), le huitième message est une demande d'autorisation de transfert d'argent du compte bancaire du premier sujet vers le compte bancaire du second sujet ;
- à l'étape n), l'autorisation accordée pour le transfert d'argent du compte bancaire du premier sujet au compte bancaire du second sujet est générée.

3. Procédé pour permettre une opération à distance selon les revendications 1 ou 2, dans lequel le second dispositif électronique est un point de vente (108) d'un magasin et l'opération de connexion point à point est un paiement d'un bien ou d'un service au point de vente, le procédé comprenant, au lieu des étapes g)-o), les étapes de :
g1) recevoir (t7), au niveau du premier dispositif électronique (8-1), le quatrième message de confirmation et générer (t8) à partir de celui-ci une demande de partage de l'identifiant d'opération avec un point de vente (108) ;
h1) afficher (t109), sur un écran du premier dispositif électronique (8-1), des données contenant l'identifiant d'opération contenant un ordre de paiement et l'identifiant d'utilisateur identifiant le sujet (7-1) et le point de vente (108) ;
i1) acquérir (t110), au point de vente (108), au moyen d'un lecteur optique, lesdites données affichées contenant l'identifiant d'opération contenant l'ordre de paiement et l'identifiant d'utilisateur, extraire des données affichées la valeur de l'identifiant d'opération et détecter que le paiement a été demandé par le premier sujet (7-1) envers le point de vente (108) ;
j1) transmettre (t114), du point de vente (108) au sous-système d'authentification (10), un message porteur d'une valeur indicative d'une somme d'argent associée au paiement du bien ou du service ;
k1) recevoir (t116), au niveau du sous-système d'authentification (10), ledit message et générer à partir de celui-ci une autorisation accordée pour effectuer ledit paiement du bien ou du service ;
l1) transmettre, à partir du système d'authentification (10) vers le premier dispositif électronique (8-1), un message indicatif d'une confirmation positive à une connexion point à point entre le premier dispositif électronique (8-1) et le point de vente (108).

4. Procédé pour permettre une opération à distance selon les revendications 1 ou 2, dans lequel le second dispositif électronique est un magasin virtuel disposant d'un site Internet pour l'achat en ligne d'un bien ou d'un service et l'opération est un paiement en ligne d'un bien ou d'un service,
le procédé comprenant, au lieu des étapes g)-o), les étapes de :
g2) recevoir (t7), au niveau du premier dispositif électronique (8-1), le quatrième message de confirmation et générer (t8) à partir de celui-ci une demande de partage de l'identifiant d'opération avec le site Internet du magasin virtuel ;
h2) transmettre, à partir du premier dispositif électronique (8-1) vers le site Internet via un réseau de télécommunications, un paquet de données porteur de l'identifiant d'opération contenant un ordre de paiement pour un bien ou un service et l'identifiant d'utilisateur identifiant le premier sujet (7-1) et le site Internet ;
i2) recevoir, au niveau du site Internet, ledit paquet de données, extraire à partir de celui-ci une valeur de l'identifiant d'opération, extraire à partir de celui-ci l'ordre de paiement et l'identifiant d'utilisateur et détecter que le paiement a été demandé par le premier sujet (7-1) envers le site Internet ;
j2) transmettre, à partir du site Internet du magasin virtuel au système d'authentification (10), un message porteur d'une valeur indicative d'une somme d'argent associée au paiement du bien ou du service ;
k2) recevoir, au niveau du système d'authentification (10), ledit message et générer à partir de celui-ci une autorisation accordée pour effectuer ledit paiement du bien ou du service ;
l2) transmettre, à partir du système d'authentification (10) vers le premier dispositif électronique (8-1), un message indicatif d'une confirmation positive à une connexion point à point entre le premier dispositif électronique (8-1) et le site Internet du magasin virtuel.

5. Procédé pour permettre une opération à distance selon la revendication 1, dans lequel l'identifiant d'opération est un lien Web.

6. Procédé pour permettre une opération à distance selon l'une quelconque des revendications précédentes, dans lequel le premier dispositif électronique est un dispositif mobile, choisi parmi un Smartphone, une tablette, un iPhone, un iPad.

7. Support de stockage non transitoire lisible par ordinateur comportant un programme comprenant des parties de code d'un logiciel adaptées pour exécuter les étapes du procédé selon les revendications 1-6, lorsque ledit programme est exécuté sur au moins un ordinateur.

8. Système électronique pour permettre une opération à distance au moyen d'une connexion point à point, le système comprenant un premier dispositif électronique (8-1), un second dispositif électronique (8-2), un sous-système d'authentification (10) relié aux premier et second dispositifs électroniques, un sous-système de partage (20) de messages pour relier le premier dispositif électronique (8-1) au second dispositif électronique (8-2) l'un à l'autre via un réseau de télécommunications (20) à moyenne-longue distance,
dans lequel le premier dispositif électronique (8-1) est configuré pour :
- transmettre (t0), vers le sous-système d'authentification (10), un premier message indicatif d'une demande de génération d'un identifiant d'une opération de connexion point à point entre un premier sujet (7-1) associé au premier dispositif électronique (8-1) et un second sujet (7-2) associé au second dispositif électronique (8-2) ;
- recevoir (t3) un deuxième message porteur d'une valeur d'un identifiant d'opération unique contenant des informations indicatives du type d'opération de connexion point à point et contenant un identifiant d'utilisateur identifiant le premier sujet (7-1) et un second sujet (7-2) impliqués dans l'opération de connexion point à point, et transmettre (t4) à partir de celui-ci, vers le sous-système d'authentification (10), un troisième message de demande demandant la vérification d'une identité numérique d'un premier sujet (7-1) ;
- recevoir (t7) un quatrième message de confirmation confirmant la vérification positive de l'identité numérique du premier sujet et générer (t8) à partir de celui-ci une demande de partage de l'identifiant unique avec un second dispositif électronique (8-2) ;
- transmettre (t9), vers le second dispositif électronique (8-2), un cinquième message porteur d'une valeur de l'identifiant d'opération ;
- recevoir (t18) un sixième message indicatif d'une confirmation positive ou négative à une connexion point à point entre le premier dispositif électronique (8-1) et le second dispositif électronique (8-2) ;
dans lequel le sous-système d'authentification (10) est configuré pour :
- recevoir (t1) le premier message et générer (t2) à partir de celui-ci ledit identifiant d'opération unique contenant des informations indicatives du type d'opération de connexion point à point et contenant l'identifiant d'utilisateur identifiant le premier sujet (7-1) et le second sujet (7-2) impliqués dans l'opération de connexion point à point ;
- transmettre (t2), vers le premier dispositif électronique (8-1), le deuxième message porteur de la valeur dudit identifiant d'opération généré ;
- recevoir (t5) le troisième message de demande et vérifier avec succès (t5), au moyen du sous-système d'authentification (10), l'identité numérique du premier sujet ;
- transmettre (t6), vers le premier dispositif électronique (8-1), le quatrième message de confirmation confirmant la vérification positive de l'identité numérique du premier sujet (7-1) ;
- recevoir (t13) un septième message de demande demandant la vérification d'une identité numérique d'un second sujet (7-2) et vérifier avec succès, au moyen du sous-système d'authentification (10), l'identité numérique du second sujet ;
- transmettre (t14), vers le second dispositif électronique (8-2), un huitième message de confirmation confirmant la vérification positive de l'identité numérique du second sujet (7-2) ;
- recevoir (t16) un neuvième message de demande demandant une autorisation de ladite opération de connexion point à point et générer à partir de celui-ci une autorisation accordée pour effectuer ladite opération de connexion point à point ;
- transmettre (t17), vers le premier dispositif électronique (8-1) et/ou vers le second dispositif électronique (8-2), le sixième message indicatif de la confirmation positive ou négative à la connexion point à point entre le premier dispositif électronique (8-1) et le second dispositif électronique (8-2) ;
dans lequel le sous-système de partage (20) de messages est configuré pour transmettre, à partir du premier dispositif électronique (8-1) vers le second dispositif électronique (8-2), le cinquième message porteur d'une valeur dudit identifiant d'opération ;
et dans lequel le second dispositif électronique (8-2) est configuré pour :
- recevoir (t11) le cinquième message porteur de la valeur de l'identifiant d'opération, extraire à partir de celui-ci les informations indicatives du type d'opération de connexion point à point et l'identifiant d'utilisateur identifiant le premier sujet (7-1) et le second sujet (7-2), et détecter que l'opération de connexion point à point a été demandée par le premier sujet (7-1) vers le second sujet (7-2) ;
- transmettre (t12), vers le sous-système d'authentification (10), le septième message de demande demandant la vérification de l'identité numérique du second sujet (7-2) associé au second dispositif électronique (8-2) ;
- recevoir (t15) le huitième message de confirmation et transmettre à partir de celui-ci, vers le sous-système d'authentification (10), le neuvième message de demande demandant l'autorisation de ladite opération de connexion point à point ;
- recevoir (t19) le sixième message indicatif de la confirmation positive ou négative à une connexion point à point entre le premier dispositif électronique (8-1) et le second dispositif électronique (8-2).

9. Système électronique selon la revendication 8, dans lequel l'opération de connexion point à point est une opération de transfert d'argent entre un compte bancaire associé au premier sujet et un compte bancaire associé au second sujet,
dans lequel le second dispositif électronique (8-2) est en outre configuré pour :
- détecter que l'opération est un transfert d'argent du compte bancaire du premier sujet vers le compte bancaire du second sujet ;
- transmettre le huitième message de demande demandant une autorisation de transfert d'argent du compte bancaire du premier sujet vers le compte bancaire du second sujet ;
dans lequel le système d'authentification est en outre configuré pour générer à partir de celui-ci une autorisation accordée de transfert d'argent du compte bancaire du premier sujet vers le compte bancaire du second sujet.

10. Système électronique selon la revendication 8, dans lequel le second dispositif électronique est un point de vente (108) d'un magasin et l'opération de connexion point à point est un paiement d'un bien ou d'un service au point de vente,
dans lequel le premier dispositif électronique (8-1) est configuré pour :
- recevoir (t7) le quatrième message de confirmation et générer (t8) à partir de celui-ci une demande de partage de l'identifiant d'opération avec un point de vente (108) ;
- afficher (t109), sur son écran, des données contenant l'identifiant d'opération contenant l'ordre de paiement et l'identifiant d'utilisateur identifiant le sujet (7-1) et le point de vente (108) ;
- recevoir un message indicatif d'une confirmation positive ou négative à une connexion point à point entre le premier dispositif électronique (8-1) et le point de vente (108) ;
et dans lequel le point de vente (108) est configuré pour :
- acquérir (t110), au moyen d'un lecteur optique, lesdites données affichées contenant l'identifiant d'opération contenant l'ordre de paiement et l'identifiant d'utilisateur, extraire la valeur de l'identifiant d'opération des données affichées et détecter que le paiement a été demandé par le premier sujet (7-1) envers le point de vente (108) ;
- transmettre (t114), vers le sous-système d'authentification (10), un message porteur d'une valeur indicative d'une somme d'argent associée au paiement du bien ou du service ;
et dans lequel le sous-système d'authentification (10) est configuré pour :
- recevoir (t116) ledit message et générer à partir de celui-ci une autorisation accordée pour effectuer ledit paiement du bien ou du service ;
- transmettre, vers le premier dispositif électronique (8-1), ledit message indicatif d'une confirmation positive ou négative à une connexion point à point entre le premier dispositif électronique (8-1) et le point de vente (108).

11. Système électronique selon la revendication 8, dans lequel le second dispositif électronique est un magasin virtuel disposant d'un site Internet pour l'achat en ligne d'un bien ou d'un service et l'opération de paiement est un paiement en ligne d'un bien ou d'un service,
dans lequel le premier dispositif électronique (8-1) est configuré pour :
- recevoir (t7) le quatrième message de confirmation et générer (t8) à partir de celui-ci une demande de partage de l'identifiant d'opération avec le site Internet ;
- transmettre, à partir du premier dispositif électronique (8-1) vers le site Internet via un réseau de télécommunications, un paquet de données porteur de l'identifiant d'opération contenant un ordre de paiement pour un bien ou un service et l'identifiant d'utilisateur identifiant le premier sujet (7-1) et le site Internet ;
- recevoir un message indicatif d'une confirmation positive ou négative à une connexion point à point entre le premier dispositif électronique (8-1) et le site Internet ;
et dans lequel le site Internet est configuré pour :
- recevoir ledit paquet de données, extraire à partir de celui-ci une valeur de l'identifiant d'opération, extraire à partir de celui-ci l'ordre de paiement et l'identifiant d'utilisateur et détecter que le paiement a été demandé par le premier sujet (7-1) envers le site Internet ;
- transmettre, vers le sous-système d'authentification (10), un message porteur d'une valeur indicative d'une somme d'argent associée au paiement du bien ou du service ;
et dans lequel le sous-système d'authentification (10) est configuré pour :
- recevoir (t116) ledit message et générer à partir de celui-ci une autorisation accordée pour effectuer ledit paiement du bien ou du service ;
- transmettre, vers le premier dispositif électronique (8-1), ledit message indicatif de la confirmation positive ou négative à la connexion point à point entre le premier dispositif électronique (8-1) et le site Internet.
